Europäisches Patentamt

European Patent Office

Office européen des brevets

(11) Publication number: **0 093 886**
A2

(19)

(12) **EUROPEAN PATENT APPLICATION**

(21) Application number: 83103561.3

(51) Int. Cl.³: **G 11 B 5/52**

(22) Date of filing: 13.04.83

(30) Priority: 22.06.82 US 391058
30.06.82 US 393964
12.10.82 US 433618

(43) Date of publication of application: 16.11.83
Bulletin 83/46

(84) Designated Contracting States: DE FR GB IT

(71) Applicant: International Business Machines
Corporation, Old Orchard Road, Armonk, N.Y. 10504 (US)

(72) Inventor: Charlson, Paul Marlin, 1732 Drake Street,
Longmont Colorado 80501 (US)
Inventor: Estry, Richard Hunt, 2306 21st Avenue NW,
Rochester Minnesota 55901 (US)
Inventor: Schwieters, Clarence Raymond, 1126 Cascade
Street NW, Rochester Minnesota 55901 (US)
Inventor: Goldstein, Andrew David, 3080 17th Street,
Boulder Colorado 80302 (US)
Inventor: Russell, Kim Edward, 2123 Meadow Court,
Longmont Colorado 80501 (US)
Inventor: Scott, Arthur Wayne, 429 Judson Street,
Longmont Colorado 80501 (US)
Inventor: Baasch, Holger Johan, 1209 19th Street NE,
Rochester Minnesota 55901 (US)
Inventor: Bishop, Ross W., 1335 So. Lincoln Street,
Colorado 80501 (US)
Inventor: Hunzeker, James Gordon, 8720 Niwot Road,
Longmont Colorado 80501 (US)
Inventor: Charlson, Paul Martin, 2400 Timberidge Lane,
Rochester Minnesota 55901 (US)

(74) Representative: Petersen, Richard Courtenay, IBM
Svenska AB Patent Operations Box 962, S-181 09 Lidingö
(SE)

(54) Manufacturing method and apparatus for adjusting the position of a magnetic head in a flexible disk drive.

(57) During manufacture of a flexible disk drive (102), the
magnetic head (101) is located in its penetration, radial,
azimuth, tangential, roll and pitch attitudes by reading a test
disk, as the head is held by a robotic head holder/
manipulator (166). The head signal is used to produce
closed-loop control of a serially-stacked array of rotary and
linear motors which position the holder/manipulator. After
the head is properly adjusted, it is secured to the head
carriage (168) of the disk drive by irradiating radiation cur-
able adhesive therebetween.

BO9-82-OO1                    1

MANUFACTURING METHOD AND APPARATUS FOR ADJUSTING THE
POSITION OF A MAGNETIC HEAD IN A FLEXIBLE DISK DRIVE

This invention relates to apparatus for use in positioning a magnetic
head relative to a head carriage of a flexible disk drive.

In flexible disk drives, it is known that six position parameters of
the magnetic head gap(s) must be considered during manufacture of the
drive.   These six parameters are: penetration of the head into the
plane of the rotating disk; the radial position of the head along a
fixed-position radius of the disk; the tangential position of the head
along a line which is tangent to a circular data track carried by the
disk at the point of intersection of the fixed-position radius and the
centre line of the data track; the azimuth rotation of the head about
an axis normal to the plane of the disk; the pitch rotation of the
head about an axis parallel to the fixed-position radius; and the roll
rotation of the head about an axis parallel to the aforementioned
tangent line.

For example, the linear gap of the head may lie on the fixed-position
radius or be parallel thereto, may be centred on the tangent line,
should have a pitch attitude which produces a desired distance
relationship between the gap and the magnetic recording surface of the
disk (for example, perpendicular, and should have a roll attitude
which produces a constant spacing between the gap and the disk, along
the width of the gap (i.e. the gap dimension which is parallel to the
fixed-position radius).

2

Within the teachings of the present invention, the head may be adjusted relative the fixed-position radius. For example, the head gap may be intentionally offset a distance from this radius when the head is in its desired, adjusted position.

US-A-4,097,908 discloses a method of inspecting the azimuth parameter of the head of a flexible disk drive, and thereafter relocating the head-positioning mechanism so as to minimize azimuth error. In this method, a master disk is provided which includes an inner track having bits of information recorded at predetermined acute angles relative the disk radius. This data track is read by the head. The head output signal is monitored on an oscilloscope and compared to a predetermined signal waveform that corresponds to the head gap being substantially parallel to the disk radius. This comparison can then be used to relocate the head-positioning mechanism.

IBM Technical Disclosure Bulletin October 1977, pages 1897 to 1901, describes a similar azimuth adjustment method for the head of a disk drive. In this arrangement the master disk is made by the use of two magnetic heads. A first of these heads writes the circular data track. This first head is visually located with its gap accurately on the radius of the disk. The head is then arcuately adjusted in order to write the data track bits of information at predetermined acute angles. The second head, which is a read head, reads this data track. The second head output signal is used to monitor and control the writing of the data track by the first head; that is, the first head is adjusted until the signal output of the second head is proper.

IBM Technical Disclosure Bulletin September 1973, pages 1338 to 1340, teaches the use of a test disk to determine the radial position of a disk drive head. This arrangement also uses a master disk. In this

3

case the master disk is provided with a number of accurately located data tracks, each one of which comprises groupings of two sync bits, centred on the track, followed by bits which are positioned a known distance on opposite sides of the track centre. The disk drive head will produce generally equal output signals from the sync bits, independent of the head radial position. However, the signal produced by the following off-centre bits will be of equal amplitude only when the head gap is centred on the data track.

GB-A-1,533,778 also deals with a test disk for facilitating radial adjustment and mentions azimuth adjustment.

The present invention provides an improved method and an apparatus for adjusting the head position parameters of a flexible disk drive during manufacture of the drive.

This is accomplished by a manufacturing apparatus which physically supports the disk drive undergoing manufacture and adjustment. The head is loosely positioned in a head carriage. A robotic type holder/manipulator grips and movably supports the head slightly spaced from the head carriage. This space contains an inactive glue or cement which will be activated, for example by injection of a catalyst or by ultraviolet light, but only after the head position has been properly adjusted.

A master flexible disk, of the general type aforesaid, is mounted to the spindle of this disk drive. As such, the master disk occupies the same general space which will be occupied by all data disks subsequently used in the disk drive after manufacture of the drive. This master disk includes an adjustment data track located at, for example, track 22 of a 45-track format, numbered from 0 to 44.

4

## Penetration Adjustment

Penetration of the head into the plane of the master disk is accomplished open loop (i.e. no signal is read from the master disk) in that relative movement of the holder/manipulator, and thereby the head and the disk, continues until a datum surface of the disk drive is encountered. As the disk drive spindle has previously been accurately located relative this same datum, the head now penetrates the plane of the disk by a known distance.

At this time the master disk may or may not be rotating. However, after penetration has been achieved, the disk rotates at its operational speed in preparation for subsequent adjustment.

Rotation of the master disk can be accomplished either by the drive spindle motor, or by an apparatus-mounted motor.

The sequence of the remaining head adjustment parameters is not critical to the present invention; however, the following sequence is preferred. In all cases, test cells of five data groups each located in track 22 of the master disk are monitored to achieve head adjustment.

## Radial Adjustment

The head signal is monitored in order to centre the head gap on the centre line of track 22. A first bidirectional linear motor is located to produce head motion which is linear and coincident with a fixed-position disk radius. Closed-loop control of this linear motor, as a function of the head signal, positions the holder/manipulator,

5

and the head gap, such that the centre of the head gap is coincident with the centre line of track 22.

## Azimuth Adjustment

The head is operable to read the master data track and the head signal is operable to closed-loop control a first bidirectional rotary motor whose axis of rotation is perpendicular to the plane of the disk, and intersects the point where the centre of track 22 intersects the aforementioned fixed-position disk radius. Closed-loop control of this rotary motor positions the holder/manipulator and the head gap parallel to this disk radius.

## Tangential Adjustment

The head signal is monitored in order to measure the time of occurrence of a particular signal carried by the data track. The instantaneous rotational position of the master disk is known, as by reading a position transducer carried by the disk rotation motor, or by reading a tachometer track carried, for example, on the opposite side of the master disk from the data track.

In any event, the time of occurrence of this particular disk-carried signal, at the location of the head gap, is used to closed-loop control a second bidirectional linear motor whose movement produces movement of the head coincident with a line which is tangent to the centre of track 22 at the point where the centre of this track intersects the fixed-position disk radius. Closed-loop control of this linear motor positions the holder/manipulator and the head gap at the desired point along this target line, relative this disk radius, for example coincident therewith.

Roll Adjustment

The head signal is monitored in order to produce a constant distance relationship between opposite ends of the head gap (the gap dimension parallel to fixed-position disk radius) and opposite sides of track 22 (also measured along this disk radius).

A second bidirectional rotary motor is provided whose axis of rotation is coincident with the aforesaid tangent line. This motor is closed-loop controlled in order to position the holder/manipulator and the head gap with the aforesaid constant distance relationship.

Pitch Adjustment

At this time the head gap is very accurately positioned relative to track 22. However, the head signal can be maximized by pitch adjustment.

A third bidirectional rotary motor is provided whose axis of rotation is coincident with fixed-position disk radius. This motor is closed-loop controlled to maximize the head signal by movement of the holder/manipulator and thereby the head gap.

Clamp Head

As a final step, the now-positioned head is clamped in permanent operating relationship to the disk drive head carriage. In a preferred embodiment, a cement or glue is activated, and the master disk is maintained in rotation until the glue sets. Thereafter, all head signals are checked to ensure that the head has not shifted during clamping of the head.

The scope of the invention is defined herein and by the appended claims; and how it can be carried into effect is hereinafter particularly described with reference to the accompanying drawings, in which :-

FIGURE 1 is a top plan view of a disk drive, to the manufacture of which the invention is applicable, several components being removed;

FIGURE 2 is a bottom plan view of the disk drive of Fig.1;

FIGURE 3 shows the head for the disk drive, and the six position parameters which are adjusted in accordance with the present invention;

FIGURE 4 shows the alignment-data-track on a master disk, as this track bears a known position relationship to a disk-position track;

FIGURE 5 illustrates a means of accomplishing tangential head alignment in accordance with the present invention;

FIGURE 6 is another view of the data track of Fig.4, and shows how each group of data patterns is broken up into ten sectors;

FIGURE 7 shows a circuit for accomplishing tangential head adjustment in accordance with the present invention;

FIGURE 8 shows a circuit for accomplishing radial head adjustment, and/or azimuth head adjustment, in accordance with the present invention;

8

FIGURE 9 shows another circuit for accomplishing tangential head adjustment in accordance with the present invention;

FIGURE 10 shows of one embodiment of apparatus of the present invention;

FIGURE 11 is a side view of a second alignment apparatus in accordance with the present invention;

FIGURE 12 is a front view of the apparatus of Fig.11;

FIGURE 13 is a sectional view showing the master disk drive hub, and the pin-coupling to the drive hub by means of a compliant ball interface;

FIGURE 14 is a top view of the apparatus of Fig.11;

FIGURE 15 is a side view of the five-motor stack as seen in the plane of roll and radial movement;

FIGURE 16 is a top view of the motor stack of Fig.15;

FIGURE 17 is a side view, at 90° to Fig.15, as seen in the plane of pitch and tangential movement;

FIGURE 18 is a front view, partly in section, showing the head holder/manipulator for the apparatus of Fig.11;

FIGURE 19 is a top view showing the head holder/manipulator for the apparatus of Fig.11;

9

FIGURE 20 shows the head in relation to the movable carriage, and the adhesive which, when activated, clamps the head to the carriage, after the head has been properly positioned;

FIGURE 21 is an exploded view of the movable arms of the head holder/manipulator which supports the head of Fig.20;

FIGURE 22 illustrates how the head penetration into the master disk is controlled in the apparatus; and

FIGURE 23 shows yet another way to achieve head penetration movement in accordance with the present invention.

The method and apparatus according to the invention is for use in positioning a magnetic head relative to a head carriage of a flexible disk drive. Embodiments of such a disk drive are disclosed in application No.83100920.4 (EP-A-       ).

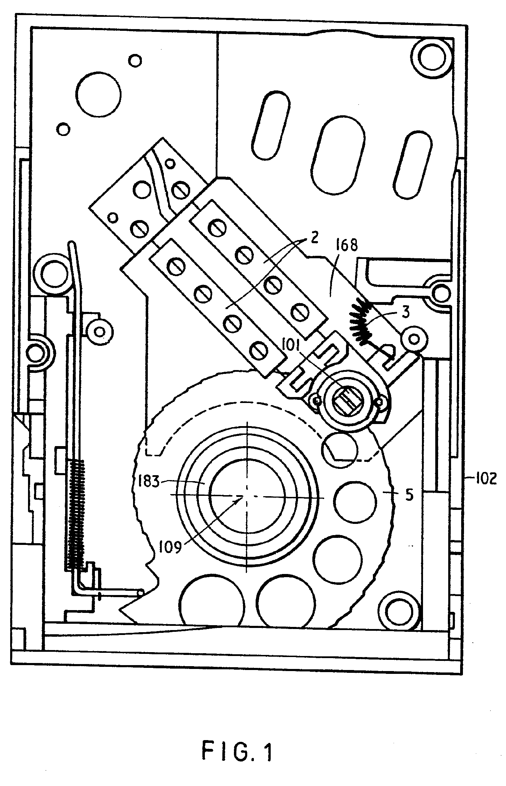

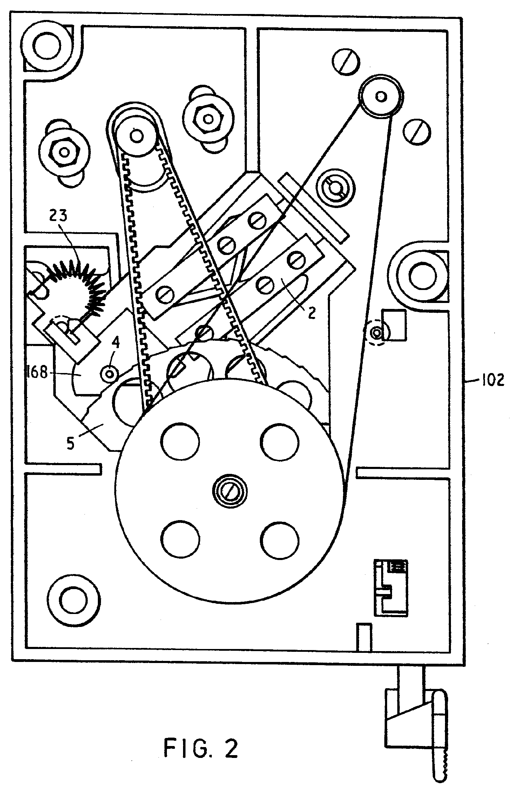

A disk drive 102 (Fig.1) includes a magnetic head 101, which, after positioning, is secured to a head carriage 168 mounted on cantilevered flexure arms 2 fastened to the frame of the drive 102. Such an arrangement is described in application No.82111572.2 (EP-A-       ). The end of the arms to which the carriage 168 is mounted is pushed radially towards a rotational axis 109 of a disk spindle 183 by a spring 3. The head carriage 168 has a depending cam follower 4 (Fig.2) in the form of a shaft and roller bearing assembly below the head 101. The cam follower 4 engages the stepped periphery of a head indexing cam 5 which is rotatably mounted about the axis 109. The cam 5 has forty six dwells and for the positioning of the head 101 on the carriage 168 is rotated until the cam follower 4 engages a central dwell.

10

A master disk is mounted on the spindle 183 and has an adjustment data track at the track corresponding to the position of the head.

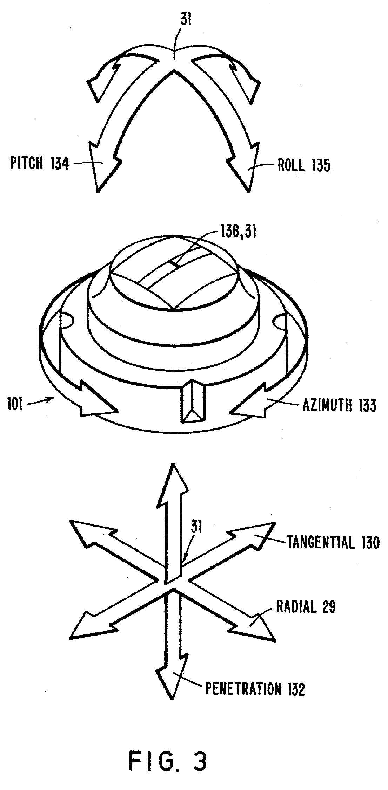

The head 101 (Fig.3) is to be adjusted in the six disclosed position parameters.

Arrows, lines or axes 29, 130 and 132 are orthogonal. Radial axis 29 and tangential axis 130 lie in the plane of the master disk, and the intersection of these axes is the point 31 which lies on the centre line of the alignment data track of the master disk. Penetration axis 132 is perpendicular to the plane of the disk and intersects axes 29 and 130 at point 31.

Azimuth rotation of head 101 is represented by arrow 133. The plane of this rotation is parallel to the plane of axes 29 and 130. The axis of this rotation intersects point 31.

Roll rotation of head 101 is represented by arrow 135. The plane of this rotation includes head gap 136. The plane of roll rotation also includes radial axis 29.

Pitch rotation of head 101 is represented by arrow 134. The plane of this rotation is perpendicular to the plane containing roll rotation 135 and gap 136. The plane of pitch rotation includes tangential axis 130.

The intersection of roll arrow 135 and pitch arrow 134 is also point 31. All six of these head motion parameters are related to a point 31 in space to which head gap 136 is to be aligned.

11

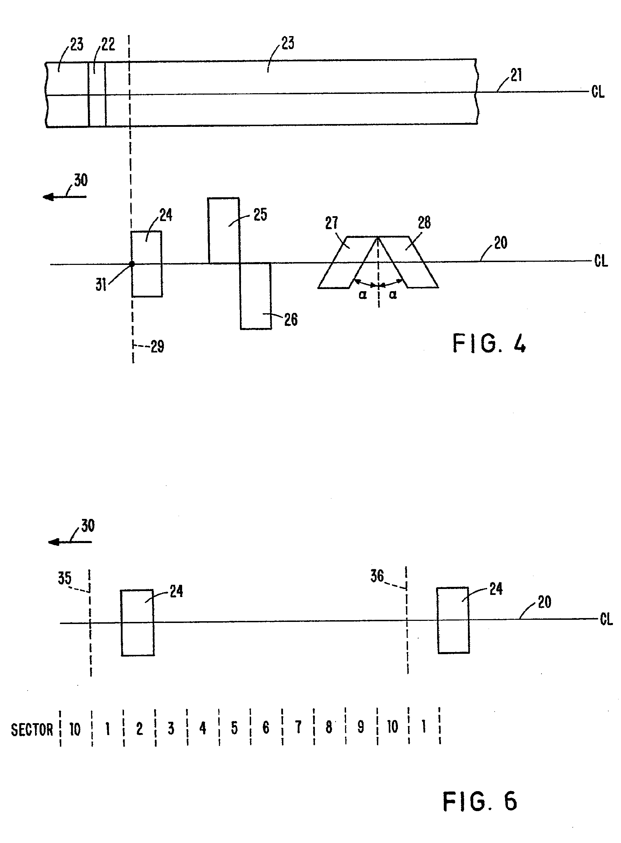

FIGURE 4 shows, in straightened form, the centre line 20 of the circular head alignment data track, and the centre line 21 of a position transducer (tachometer) track which bears a known position relationship to the data track. In addition, the position transducer track may be carried on the disk itself, or on a tachometer which is driven by the motor which in turn drives the master disk.

The position transducer track includes a record 22 from which is derived one index pulse or burst of data, followed by a record 23 from which are derived constant-frequency clock pulses, about the full 360° circle of the position track. Clock record 23 may, for example, provide 1920 pulses in one revolution of the master disk.

The head alignment data track includes twelve identical, sequential test cells of three data groups about the 360° circumference of the track. The data groups may, for example, provide the same constant frequency burst of data, such as from a magnetic recording at 333 kilohertz.

Data group 24 is the tangential-alignment data group, and is centred on the centre line 20. Data group comprising sub-groups 25 and 26 is the radial-alignment data group, and the subgroups are offset on opposite sides of the track centre line 20. As shown, all data groups are written with the same head; thus, the transverse width of the data groups correspond one to the other. While not critical to the present invention, it is preferred that data subgroups 25 and 26 do not cross centre line 20.

Data group comprising subgroups 27 and 28 is the azimuth-alignment data group, and is centred on centre line 20. The magnetic

12

transitions comprising these two data subgroups lie at equal but opposite angles to a line which is normal to centre line 20.

Data subgroups 27 and 28 are read by the head 101 to be adjusted, and the signal thus derived by this head is used to achieve azimuth adjustment of the transducing gap of the head. The magnetic transitions of these data subgroups are a known angle off-normal to centre line 20, and the head gap is azimuth-rotated about axis 132, which intersects centre line 20 and is normal to the plane of the master disk, until the head gap produces an equal-amplitude signal from each data subgroup. In this position, the head gap 136 is normal to centre line 20.

Data subgroups 25 and 26 are read by the head 101 to be adjusted, and the signal thus derived is used to achieve radial adjustment of the head gap 136 along axis 29. Only when the head gap is centred on centre line 20 will the head read equal amplitude signals from data subgroups 25 and 26. It can be seen that this is true even when azimuth head gap error exists.

Data group 24 can be used to identify the beginning of each test cell, and thus can operate to position-locate the following data subgroups 25 to 28. Data group 24 is also the means whereby tangential alignment of the head gap is achieved.

Radial axis 29 represents an exemplary position of a non-moving, fixed-position master disk radius to which the head gap is to be aligned. The alignment data track and the position transducer track are recorded in a known position relation to this radius, and also move relative to this radius in the direction of disk rotation, arrow 30. For example, the beginning of the first data group 24 to be

13

encountered after index pulse 22, is a known number of clock pulses 23 after index pulse 22.

The point 31 at which radius 29 intersects centre line 20 is a point in space relative to which the centre of the head gap is to be aligned. The plane is in fact the plane of the master disk.

The function of the position transducer track is to provide an instantaneous, ever changing, indication of the position of each of the twelve data groups 24 relative to fixed-position radius 29. By knowing when each data group 24 arrives at radius 29 (for example by counting clock 23, as initialized by index pulse 22), the head is tangent-adjusted so that its gap begins reading data group 24 at a desired time relative to data group 24 arriving at radius 29, for example, at the same time. As centre line 20 is shown as a straight line, it also corresponds to the direction 130 of head tangent adjustment.

As for pitch and roll adjustment, any or all of the data groups can be used. However, data group 24 is preferred, and these two head adjustments are made to maximize the head signal amplitude produced by reading data group 24.

As can be appreciated, the use of multiple data groups about the circumference of the alignment data track allows the various signals to be averaged and then a magnitude of head adjustment to be calculated based on average position error. In this averaging technique, obviously invalid data can be disregarded, in the event of a signal dropout or the like. After an average error has been computed, the magnitude and sign of this error can be used to determine the magnitude and direction, respectively, of the head

14

movement which is necessary in order to reduce a subsequent average error signal to zero. It may be desirable to approach such a zero-error head position by using more than one head adjustment step, and any head position overshoot can be corrected by the use of a resultant average error signal of opposite sign.

Exemplary movement steps are 0.508µm (20 microinches) of linear movement and 0.1 minute of arc rotary movement.

For the position transducer track accurately to indicate the instantaneous position of each of the twelve data groups, relative to the fixed position in space of radius 29, this position transducer track must be very accurately located relative to the alignment data track of the master disk.

When pulse 22 and clock 23 are generated by a tachometer coupled to the master disk drive motor, this accuracy is provided by the accuracy of the tachometer and by the accuracy of the one-position in which the drive shaft of the motor can be coupled to the drive hub of the master disk.

When pulse 22 and clock 23 are generated by a tachometer track carried by the master disk itself, this accuracy is provided by very accurately writing pulse 22 and clock 23 onto the master disk. One arrangement for so writing a disk tachometer track involves using the master disk drive motor tachometer, and a write circuit which controls a write-head. This write-head essentially duplicates the tachometer pulse output as a disk tachometer track. In an arrangement such as this, index pulse 22 from the motor tachometer gates a write pulse to a magnetic head. This head then places an index pulse 22 on the disk tachometer track. Thereafter, every pulse of the motor tachometer clock 23 causes a clock pulse to be written on the disk tachometer track. As can be appreciated, the distances between clock pulses, now recorded on the disk tachometer track, are uniform and identically related to the motor tachometer clock 23, independent of any motor speed variations which may occur during writing of the disk tachometer track.

As used herein, the term "tangential" alignment also refers to movement of the head gap along the circumference of data track centre line 20 (Fig.4).

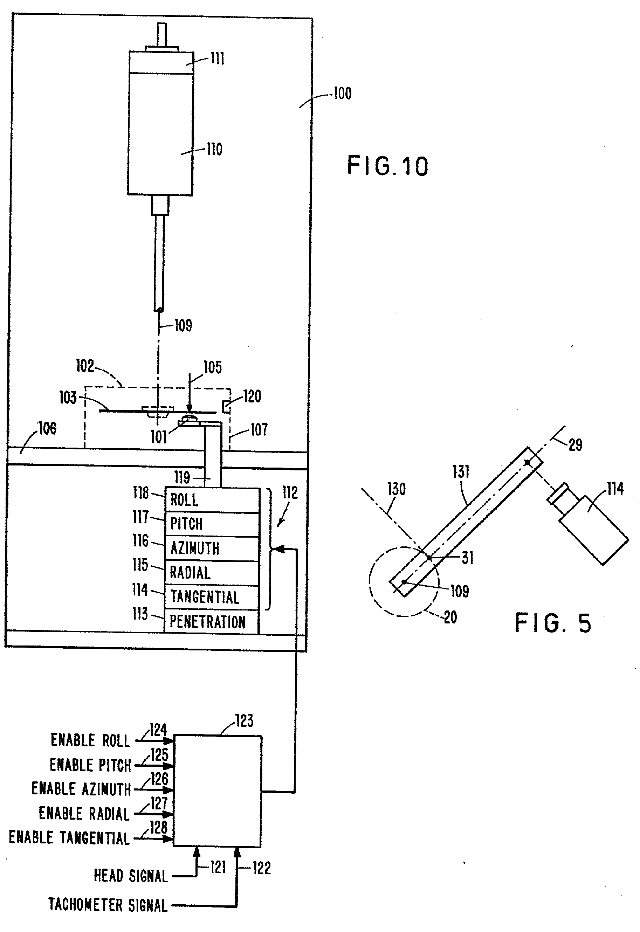

Fig.5 shows this track centre line 20 in its true circular form, concentric about the vertical spin axis 109 of the master flexible disk. Reference numeral 29 indicates the fixed-position disk radius. This radius intersects centre line 20 at point 31. Line 130 is a line tangent to centre line 20 at point 31, and the aforesaid "tangential" head adjustment is produced by a bidirectional linear rotor 114 which produces linear motion along line 130.

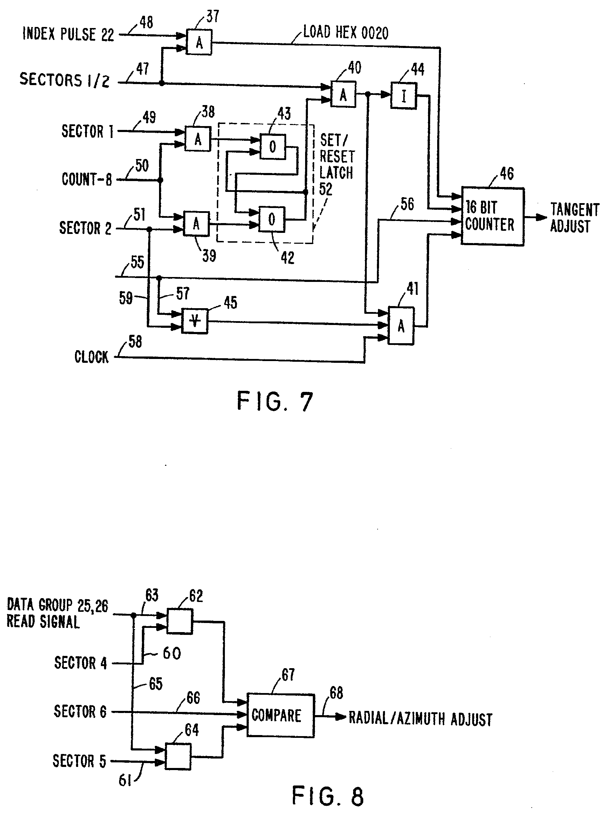

Fig.6 shows a portion of the master disk alignment data track. For purposes of definition and explanation only, spaced dotted lines 35 and 36 are shown as dividing the alignment data track into a test cell which contains data groups 24 to 28. Twelve of these test cells comprise the 360° alignment data track. Each test cell is conceptually divided into 10 equal-size sectors, defined as sectors 1 to 10, as shown. Data group 24 which is used for tangential head alignment exists in sector 2 of each test cell.

The positions of dotted lines 35 and 36, as well as the boundary locations between sectors 1 to 10, are determined by a position-counter which is initialized upon detection of index pulse 22, and which thereafter counters the 1920 pulses of clock 23 which occur during one revolution of the master disk. In this manner, these boundaries are accurately determined relative to alignment data groups. Decoding of this advancing position-counter provides the twelve test cells, comprising 10 sectors per test cell, and comprising 16 clock pulses of clock 23 per sector. For purposes of definition, the mid position of each sector will be called count-8, whilst count-16 defines the boundary between sectors.

Fig.7 is a discrete-logic circuit which calculates the magnitude and direction of the tangential alignment step necessary to produce a desired relationship, for example coincidence, between the head gap and the aforedefined fixed-position disk radius 29.

The input conductors to this circuit include a tangential-alignment-enable line 47 which is active during the time that the position-counter indicates that the fixed-position radius 29 is within sector 1 or 2 of a test cell.

Conductor 48 is activated by the occurrence of index pulse 22, thereby indicating that a one-disk-revolution tangential alignment procedure is about to begin. Coincidence of active conductors 47 and 48 enables AND circuit 37, and the output thereof loads a hexadecimal value "0020" into a 16-bit counter 46.

Input conductors 49 and 51 are active during the time that the position counter indicates that the fixed-position radius 29 is within sector 1 and sector 2 of a test cell, respectively. Input conductor 50 receives a count-8 pulse indicating the midposition of each sector. AND circuit 38 has input conductors 49 and 50 and an output to OR circuit 43, whose output is an input to OR circuit 42. AND circuit 39

17

has input conductors 50 and 51 and an output to OR circuit 42, whose output is to OR circuit 43 and to an input to AND circuit 40 whose other input is the conductor 47.

The OR circuits 42 and 43 and their connections form a set/reset latch 52. Conductors 49 to 51, AND circuits 38 and 39, and set/reset latch 52 define an alignment data track sector window during which the circuit is operative.

Signals for conductors 49 to 51 are provided by decoding the state of the above-mentioned position counter. So long as this count indicates that the fixed-position radius is in sector 1, conductor 49 is active; when this radius is in sector 2, conductor 51 is active; and the occurrence of the middle of each of sectors 1 and 2 produces an active pulse on conductor 50. AND circuit 38 is first enabled at the middle of sector 1, thus setting latch 52. AND circuit 40 is now enabled, and its output enables counter 46 by way of inverter 44, as well as providing one enabling input to AND circuit 41.

The head gap whose tangential position should, for example, coincide with the sector 1-sector 2 boundary (i.e. the beginning of data group 24) may not so coincide prior to tangential alignment. Due to the coarse accuracy of the head alignment apparatus, the head gap will, however, be somewhere in the distance spanned by sector 1 and sector 2.

Assume that the head being adjusted is positioned too far to the right relative to data group 24. In this case, data group 24 will be read by the head while the position counter is indicating sector 1, i.e., the head was encountered during movement in the direction 30 prior to the time it should have been encountered. The detection of data group

18

24 by the head activates conductor 55. As a result, conductor 56 enables counter 46 to count down, and conductor 57 enables exclusive-OR circuit 45 to condition AND circuit 41 so that clock pulse conductor 58 begins decrementing counter 46. Conductor 58 is connected to the output of a constant-frequency electronic clock (not shown).

The next event to occur, under the assumed condition of head tangent position error, is that sector 2 signal on conductor 51 becomes active at the boundary between sector 1 and sector 2. Conductor 59 now becomes active and exclusive-OR circuit 45 drops its output to inhibit AND circuit 41. In addition, latch 52 is reset, causing AND circuit 40 and inverter 44 to disable counter 46.

The count now in counter 46 is a measure of the extent of leftward movement of the head (i.e. in the direction 30) which is necessary to bring the head gap to the position of the fixed-position disk radius.

In actual practice, the above procedure is repeated for more than one test cell and preferably for all test cells. As a result, counter 46 cumulatively decrements several times, and the average single decrement is used to produce the needed tangential movement of the head gap.

It will be understood that when the head gap is initially too far to the left, the head detects data group 24 somewhere in sector 2, and not at the sector 1-sector 2 boundary. In this condition, sector 2 conductor 51 becomes active before data group 24 is detected. Exclusive-OR circuit 45 enables AND circuit 41 and counter 46 begins counting. However, conductors 55 and 56 are not active until the head encounters data group 24, so that counter 46 counts up.

19

Later, when data group 24 is encountered by the head being aligned, conductors 55, 56 and 57 become active. Exclusive-OR 45 is disabled, AND circuit 41 is likewise disabled, and incrementing of counter 46 stops.

The extent to which counter 46 has been advanced is a measure of the distance that the head must be moved to the right in order to place the head at the boundary of sectors 1 and 2, as these locations are defined by decoding position clock track 23.

When the head gap is properly positioned, conductors 51 and 55 become active simultaneously, and exclusive OR circuit 45 does not enable AND circuit 41, in which case counter 46 neither increments nor decrements.

Data subgroup 25 occupies sector 4 (Fig.6), data subgroup 26 occupies sector 5, data subgroups 27 and 28 occupy sectors 7 and 8, respectively, and no data exists in sectors 1,3,6, 9 and 10. Other data formats may be used.

In order to achieve radial adjustment of the head which is undergoing adjustment, data subgroups 25 and 26 are read by the head. It will be appreciated that when the head gap is not centred on centre line 20, the head output signal from one of data subgroups 25 and 26 will be of a greater amplitude than that from the other.

Once tangential alignment of the head gap has been achieved, the instantaneous position of the head gap is known to coincide with the sector boundaries, as these boundaries arrive at the location of the tangent-adjusted head gap.

20

By decoding the position counter which is being advanced by clock 23, the arrival of the boundaries of sectors 4 and 5, can be identified. The arrival of the leading boundary of sector 4 at radius 29 indicated on line 60 enables an amplitude sensitive read circuit 62, so that the amplitude of the signal read by the head for data subgroup 25 on line 63 can be sampled and held by circuit 62. Likewise, the arrival of sector 5 at radius 29 indicated on line 61 enables a similar circuit 64, so that the amplitude of the signal read by the head for data subgroup 26 on line 65 can be sampled and held. The outputs of circuits 62 and 64 are to a compare circuit 67. The arrival of sector 6, indicated on conductor 66, enables compare circuit 67 during sector 6, and circuit 67 develops an output signal on conductor 68 whose amplitude is indicative of the magnitude of radial head movement necessary to produce equal outputs from circuits 62 and 64, and whose sign is indicative of the direction in which the movement should occur; i.e. either inward towards the centre of the master disk, or outward towards the periphery.

The same circuit can also be used to achieve azimuth adjustment of the head. In so doing, circuits 62 and 64 are enabled during sectors 7 and 8, respectively, and output conductor 68 of circuit 67 now carries a signal whose amplitude is indicative of the amount of azimuth rotation necessary to achieve equal read signal outputs on lines 63 and 65 from data subgroups 27 and 28, respectively. The sign of output signal on conductor 68 is indicative of the direction in which this rotary head adjustment step should be taken.

In actual practice, it is not necessary to make a tangent adjustment prior to other adjustments. As stated above, initial adjustment of the tangent position of the head is convenient because this adjustment thereafter makes the position of the head gap a known parameter relative the sector boundaries.

However, note that the track width of radial adjustment data subgroups 25 and 26 is wider than the track width of data group 24 and subgroups 27 and 28, specifically twice as wide.

As the head holder/manipulator quite accurately coarse-positions the head radially with respect to the centre line 20 of the data track, it is also possible to adjust the radial position of the head as the initial adjustment. In this case, the initial open-loop, mechanical positioning of the head is assumed to position the head initially in the location of sectors 3 to 6, as these sectors pass radius 29. Each sector is, for example, 0.1905mm (0.0075 inch) wide, and the construction of the apparatus to achieve initial positioning of the head somewhere in sector 4, 0.7620mm (0.03 inch) long area, is easily achieved.

In this alternative approach, the circuit of Fig.8 is used to achieve radial adjustment of the head, to centre its gap on centre line 20.

This initial adjustment can be followed by the use of the circuit to achieve azimuth adjustment, followed by tangent adjustment by the circuit of Fig.7.

Pitch and roll adjustment of the head also utilize the format of data groups 24 to 28. However, the sector information provided by position clock 23 need not be used. Pitch and roll adjustment of the head is made after the disk penetration, radial, azimuth and tangential adjustments of the head have been made. Pitch and roll adjustments are both made by a sequential iterative process of moving the head in a pitch and a roll attitude in order to locate the head gap in a zone of maximum signal strength produced by reading data from groups 24 to 28. The pitch/roll sequence of adjustment is not critical. As pitch and roll adjustment require only an amplitude sensitive circuit, a circuit similar to that of Fig.8 can be used, where sample and hold circuits 62 and 64 are used to compare signal amplitude for various head positions, as pitch and roll are adjusted in an iterative fashion, to find the position of high or highest signal amplitude. More specifically, the head is ideally positioned to the centre of what is usually a relatively flat amplitude range, as amplitude is plotted as a function of head position.

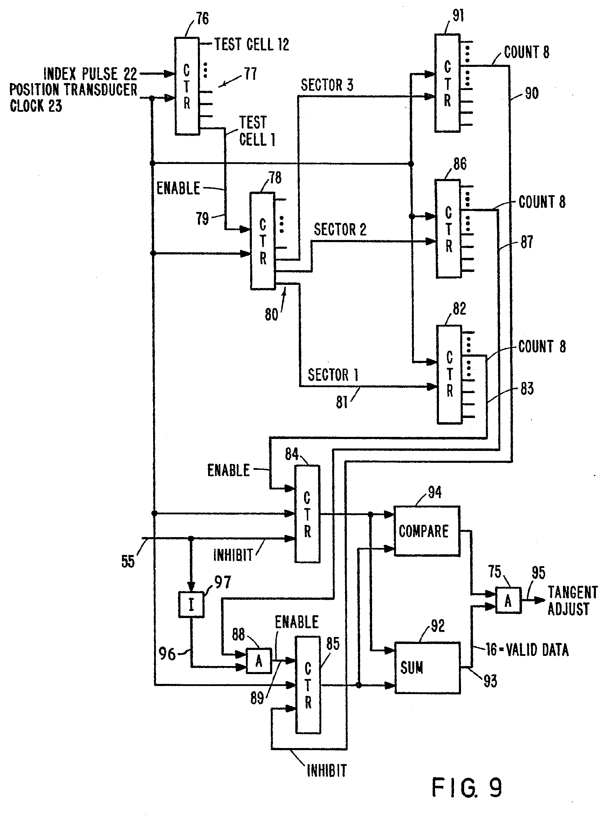

Fig.9 shows another exemplary circuit for generating a tangent adjustment output signal on line 95 from AND gate 75. This circuit operates to (1) count the number of pulses of clock 23 which occur from the time the middle of sector 1 arrives at radius 29 until the head being aligned detects the beginning of data group 24, (2) count the number of pulses of clock 23 which occur from the time the end of data group 24 is detected by the head, to the arrival of the middle of sector 3 at radius 29, (3) add these two counts to ensure that they equal "16", and (4) upon detecting the proper sum, i.e. valid data, compare the two counts in order to generate tangent adjust output signal on line 95.

The circuit of Fig.9 is operative during a given sector window, from the middle of sector 1 to the middle of sector 3. This is the equivalent of two sector lengths or thirty-two pulses of clock 23.

The head will detect the beginning and end of data group 24 somewhere in this two-sector area, and data group 24 is of a length equal to sixteen pulses of clock 23. The circuit locates the tangential position of the head gap by determining just where in this two-sector area the head gap first detects the presence of data group 24, and later first detects the absence of data group 24. This circuit has the intelligence to know that the absence of signal should exist for sixteen clock 23 pulses. If this condition is not detected, or if the error is too great, the circuit does not use the results when making an average tangential position error calculation for the multiple test cells about the 360° circumference of the adjustment data track.

The circuit (Fig.9) includes a counter 76, whereby pulses from clock track 23 are decoded in order to define the twelve test cells about the 360° circumference of the alignment data track, one test cell of which contains data groups 24 to 28. When index pulse 22 is detected, counter 76 is initialized. Thereafter, counter 76 counts the pulses of clock 23. Twelve counter outputs 77 each define the presence of an individual test cell at fixed-position radius 29.

Counter 78 is associated with test cell 1, and conductor 79 of outputs 77 enables counter 78 as test cell 1 passes radius 29. Counter 78 is then operable to count the pulses of clock 23, and has ten outputs 80 to provide a fine-position indication of the presence of radius 29 within test cell 1; i.e. an indication of which one of the ten sectors of the test cell is at the radius 29.

When radius 29 is in sector 1, conductor 81 of outputs 80 is active, and counter 82 is thus enabled to count the sixteen pulses of clock 23 which occur as sector 1 traverses fixed-position radius 29. Counter output conductor 83 is active at count-8, and signals the fact that the centre of sector 1 is at radius 29.

Counter 84 is enabled by the count-8 signal on conductor 83, and counter 84 now begins counting pulses of clock 23.

The next event to occur is variable in time, and occurs when the head to be aligned encounters the leading bit of data group 24; i.e. encounters the boundary of sector 1 and sector 2. The conductor 55 becomes active and inhibits counter 84 from further counting. If this occurs at the same time that radius 29 encounters this boundary, counter 84 will contain count-8, and the head tangential position is correct. However, assuming tangential error exists, counter 84 contains a count which is either less than count-8, or greater than count-8. When the head is positioned to the left of radius 29, the head encounters data group 24 too early relative to pulses of clock 23, and the count is less than count-8. When the head is positioned to the right of radius 29, data group 24 is encountered too late, and the count is greater than count-8.

More specifically, counter 86 is enabled to begin counting the pulses of clock 23 when the border of sectors 1 and 2 arrives at radius 29 and the sector 2 conductor of outputs 80 becomes active. Eight pulses of clock 23 later, conductor 87 becomes active, and AND circuit 88 is partially enabled. Thereafter, when the conductor 55 ceases to be active, indicating the absence of data group 24 at the head gap, the other input 96 to AND circuit 88 is raised through inverter 97 and conductor 89 enables counter 85 to begin counting the pulses of clock 23. Thus the occurrence of the last bit of data group 24, at the location of the head gap, is not allowed to enable counter 85 until the centre of sector 2, i.e. the centre of data group 24, has arrived at radius 29. Counter 91 is enabled when the leading edge of sector 3 reaches radius 29 and the sector 3 conductor of outputs 80 becomes active. At the middle of sector 3, i.e. count-8 of counter 91, counter 85 is stopped counting due to an active conductor 90.

The outputs of counters 84 and 85 are compared in compare circuit 94 and summed in sum circuit 92. Conductor 93 to AND circuit 75 is active only if the sum is sixteen.

If the head gap is properly tangent-positioned at radius 29, the arrival of the beginning of sector 3 at radius 29 will coincide with conductor 89 enabling counter 85, and counter 85 will count the first eight pulses of clock 23 which will be generated as the first half of sector 3 passes radius 29. When the head gap is positioned to the left of radius 29, the head senses the last bit of data group 24 too early relative to pulses of clock 23 and the count in counter 85 is greater than count-8 at the time that the centre of sector 3 reaches radius 29. Conversely, when the head gap position is tangentially in error to the right of radius 29, the absence of data group 24 is signaled too late, and the count in counter 85 is less than count-8 when the arrival of the middle of sector 3 at radius 29 inhibits further counting by counter 85.

In all cases, the sum of the two counts now present in counters 84 and 85 should be "16". Circuit 92 checks this sum, and activates conductor 93 if valid data has been generated by reading data group 24.

The extent of tangential error in head position is determined by the difference in the two counts now found in counters 84 and 85, and the sense of this error is determined by which counter has the higher count. Circuit 94 passes this information through AND circuit 75 to output conductor 95 as a tangent adjustment output signal which is

26

then used to effect the needed distance and direction of head gap movement in order to cause both counters subsequently to contain count-8.

As previously mentioned, a tangent error signal on conductor 95 is derived for each of the twelve test cells that provide valid data, and these signals are preferably averaged in order to determine a final error signal. In addition, it will be appreciated that the circuit of Fig.9 is initialized prior to use with each of the twelve test cells.

In Fig.9, the counters 76,78,82,86 and 91 provide information as to the location of index pulse 22 relative to radius 29, as this changes constantly and is determined by counting subsequent transducer pulses from clock 23.

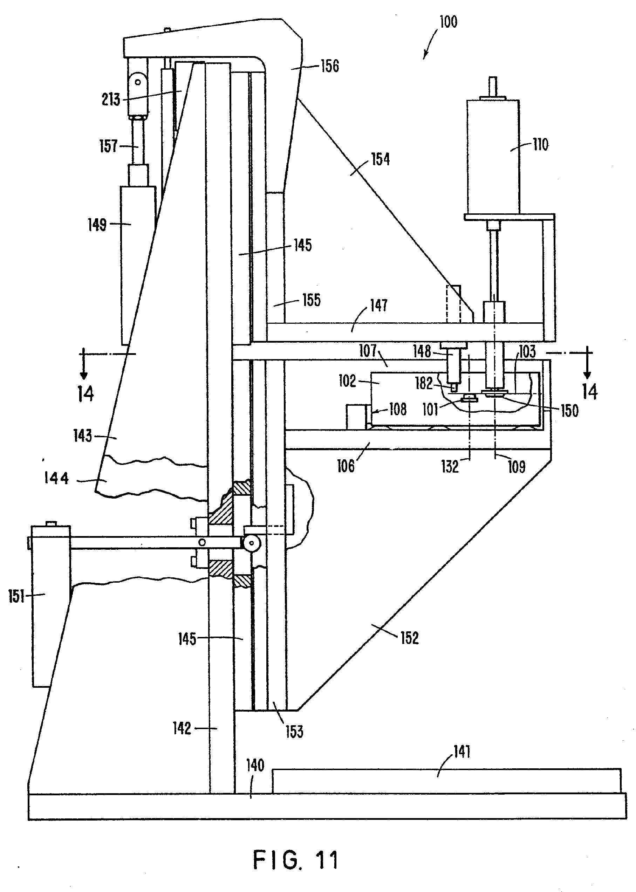

Alignment apparatus 100 (Fig.10) according to the present invention is used to operatively position head 101 of a flexible disk drive 102 shown dotted. A master disk 103 is mounted on the disk drive spindle (not shown). This master disk carries the described alignment data track at disk track 22 location, identified by arrow 105. The disk drive includes a movable head carriage (not shown) to which head 101 will be secured once the head is properly positioned. This head carriage is positioned to its track-22 position during head adjustment. As can be appreciated, the size relationship of head 101 has been exaggerated to facilitate explanation.

Apparatus 100 includes a table 106. This table includes a right-positioning datum surface 107 and a rear-positioning datum surface (not shown). These two datum surfaces define a right angle into which one corner of the outer-housing of disk drive 102 is manually located. When drive 102 is so located, head 101 is generally

27

aligned with the disk datum track, and the spin axis 109 of the drive spindle coincides with the rotational output axis of a motor 110.

Motor 110 is mounted at a fixed position on apparatus 100, and includes a tachometer 111 whose output can be used to provide index pulse 22 and clock pulses 23. This tachometer output can alternatively be provided by a track carried by master disk 103.

There is a six-motor serial array or stack 112 of motors. Penetration motor 113 is energized to lift the other motors 114 to 118, and head holder/manipulator 119, vertically upwards. This causes head 101 to penetrate the spin-plane of flexible disk 103, as this disk is spun by motor 110. This head-penetration-movement can, for example, be completed when the top surface of holder/manipulator 119 engages a disk drive datum surface 120.

Thereafter, the head output signal on line 121 and the tachometer signal on line 122 are provided as input signals to control means 123. Signals on lines 124, 125, 126, 127 and 128 operate, one at a time, to enable control of motors 118, 117, 116, 115 and 114, respectively, to adjust the head 101 and its read/write gap.

Control means 123 may take many forms, as will be appreciated by those skilled in the art. An example of a manual means is an oscilloscope whose visual output enables manual energization of motors 114 to 118 to move head 101 until a desired visual output occurs. An example of an automatic means is a programmed computer whose output controls motors 114 to 118. A combined manual/automatic means might, for example, provide an oscilloscope to ensure that the head is initially positioned within the control range of a programmed computer, and only after manual control of motors 114 to 118 properly coarse-positions the head, is control of the motors turned over to the computer for final fine-position control.

After the head is properly positioned, it is secured in operative relation to the disk drive movable head carriage (not shown).

The details of an apparatus 100, constructed in accordance with the present invention, will now be described.

Fig.11 is a side view of such an apparatus, having a base plate 140 upon which is placed a support plate 141 for a five-motor stack or array of motors (not shown).

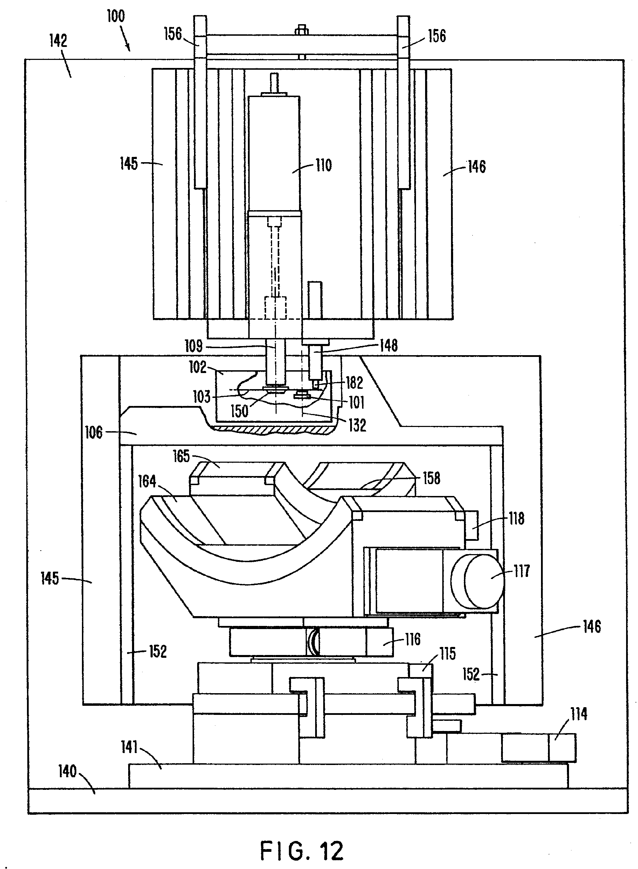

Base plate 140 mounts a support panel 142 which is held vertically upright by a pair of braces 143 and 144. Support panel 142 mounts two pairs of stationary slide blocks 145 and 146 (Fig.12). These slide blocks movably support a first, lower disposed, horizontal table 106 upon which the disk drive 102 to be adjusted is placed. An upper-disposed support table 147 (Fig.11) holds the master alignment disk spin motor 110. A position sensor 148, which operates to sense the relative vertical position of table 106 and 101, is mounted on table 147. Sensor 148 determines the distance by which head 101 penetrates the spin-plane of flexible master disk 103, as table 106 moves vertically, as will be described.

Table 106 is supported by a pair of support brackets 152 which attach to a mounting plate 153 such that the assembly 106, 152, 153 is vertically movable on lower slide blocks 145, 146.

Table 147 is similarly supported by a pair of side-disposed brackets 154 which attach to plate 155. Plate 155 includes a pair of extending arms 156 which connect to the output member 157 of air cylinder 149. Plate 155 is vertically movable on upper slide blocks 145, 146.

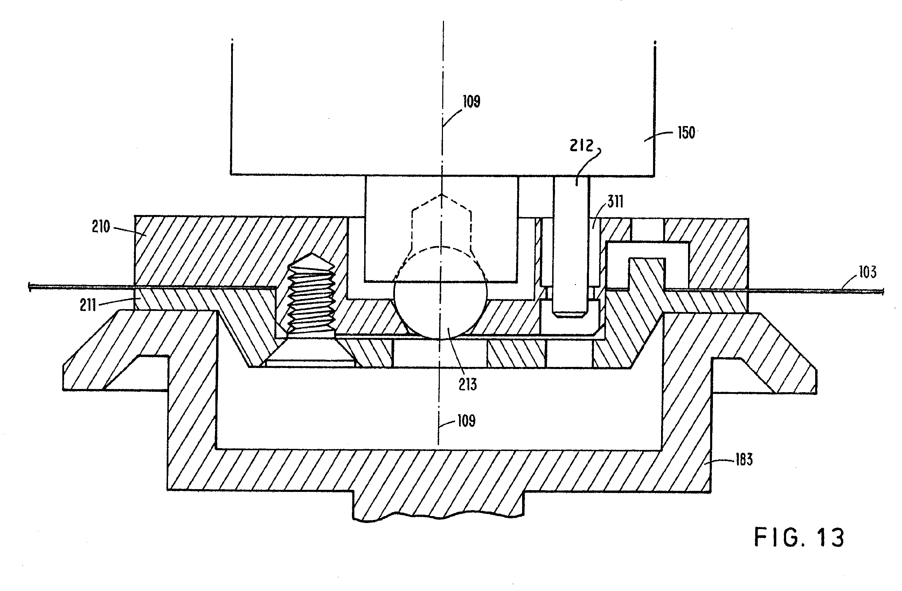

The apparatus is shown in Figs, 11 and 12 with the position of tables 106 and 147 such that proper head penetration is achieved. Prior to this time, air cylinder 149 is energized to raise table 147. When this table moves upward, the motor drive shaft 150 (Fig.13) is raised up off the disk. Table 106 (Fig.11) is biased in an upward direction by weight 151. However, table 106 can move but a short distance upwards, whereupon a stop (not shown) is encountered. The extent of upward movement of table 147, as determined by air cylinder 149, is much greater, and this separation of tables 106 and 147 allows the operator to remove an adjusted disk drive 102 and replace it with another drive whose head then undergoes adjustment.

The master disk comprises a flexible disk 103 and a centrally disposed drive hub 210, 211 (Fig.13). This drive hub can be driven by the motor shaft 150 mounted on the alignment apparatus in only one position of the disk and the motor. Thus, the relative positions of the data track and the position transducer track are known.

The head holder/manipulator 119 is supported by five-motor stack 114 to 118 (penetration adjustment of the head being accomplished by relative movement of disk drive 102 and disk 103). Tangential motor 114 is the bottom motor of this stack, and it is mounted to the base plate of fixture 100 by means of a plate 131 (Fig.5) which pivots about spin axis 109, in a plane which is parallel to disk 103. Linear motor 114 is connected to produce this movement of plate 131, and as the head is supported substantially coincident with point 31, by its holder/manipulator 119, this linear movement produces movement of the head along centre line 20, rather than along tangent line 130.

30

The tangential motor 114 (Fig.12) and radial motor 115 are linear motors. Azimuth motor 116, pitch motor 117 and roll motor 118 are rotary motors. Fig.12 does not show the head holder/manipulator, which is mounted on the movable output member 158 of the top-disposed roll motor 118.

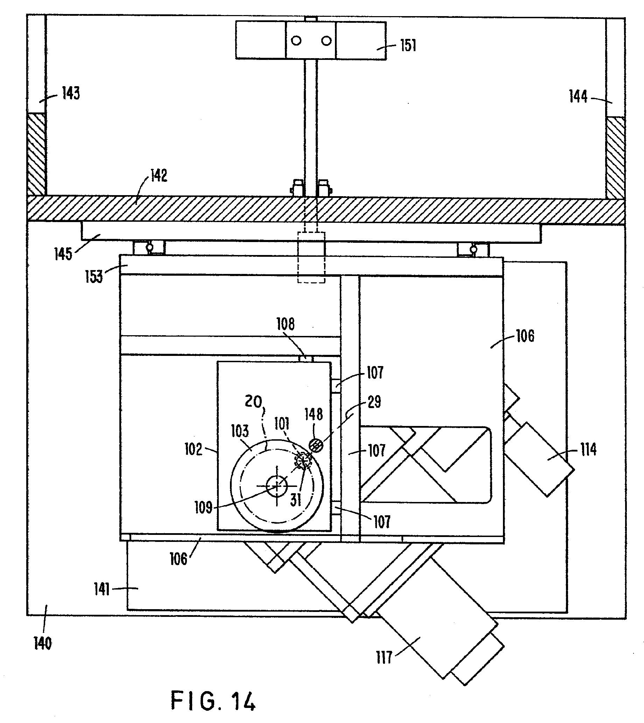

The disk drive 102 (Fig.14) is registered in position so that its rear, right-hand corner is properly registered against locating stops 107 and 108. These stops are carried by table 106. When the disk drive is properly positioned, in this manner, the spin axis of motor 110 (i.e. axis 109 in the various views) corresponds to the spin axis of the disk drive spindle.

The head 101 is disposed beneath the centre line 20 of master alignment disk alignment data track.

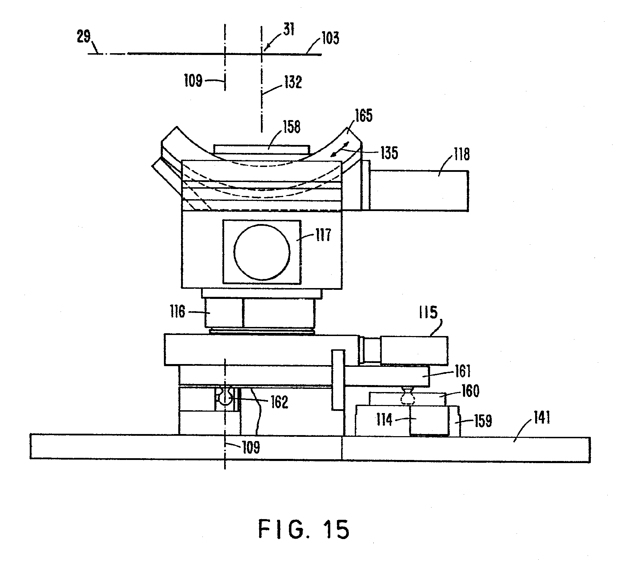

Fig.15 shows details of the five-motor stacked array 114-118, including a top-disposed mounting plate 158 to which the aforementioned head holder/manipulator of Figs.12 and 13 is mounted. Also shown in this figure is the plane of disk 103, which plane is perpendicular to the plane of the figure. The plane of Fig.15 includes fixed position disk radius 29 and penetration axis 132, as well as roll movement 135 (also see Fig.1).

Tangential motor 114 (Fig.15) comprises a housing 159 and a movable output member 160. Output member 160 is connected to plate 161. Plate 161 carries the four upper motors 115 to 118.

In a similar fashion, the movable output member of each of the motors 115 to 118 carries the housing of its next higher disposed motor, and in this manner carries all of the higher disposed motors as well as the head holder/manipulator.

Tangential motion is achieved by tangential motor 114 because plate 161 is pivoted at 162, so that plate 161 (which is perpendicular to disk spin axis 109) rotates about disk spin axis 109.

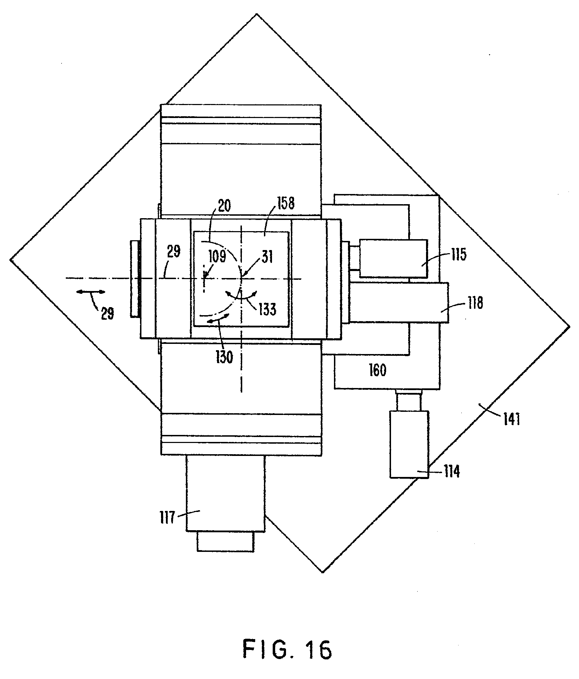

Rotation of plate 161 (Fig.16) about spin axis 109, causes the head gap (which is located at point 31 by the head holder/manipulator) to move along the track centre line 20 in accordance with tangential movement arc 130.

Radial motor 115 has a movable output member carrying motors 116 to 118 along radius 29 (Fig.16) in accordance with the double-arrow radial movement vector labeled 29.

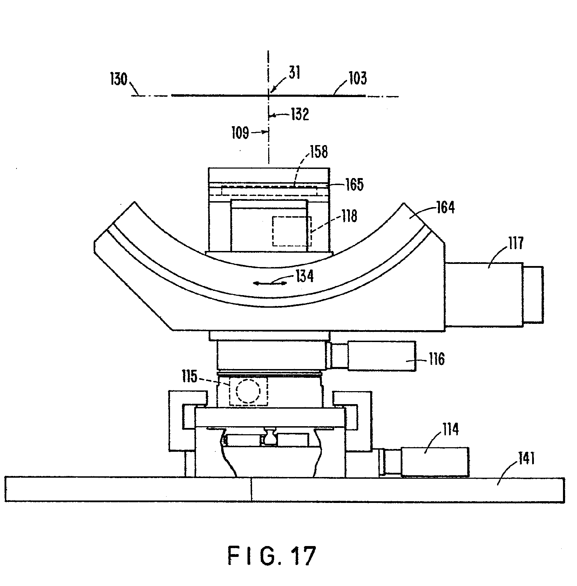

The next higher disposed azimuth motor 116 (Figs. 15 and 17) produces rotation about penetration axis 132, in a plane which is perpendicular to axis 132. This movement vector is shown in Fig.16 as azimuth movement vector 133, and this corresponds to the azimuth vector 133 shown in Fig.3.

Pitch motor 117 and roll motor 118 (the two top disposed motors of the five-motor stack) include rotary output slides 164 (Fig.17) and 165 (Fig.15), respectively. The centre of rotation of both of these output slides includes point 31. As seen in Fig.17, rotary output slide 164 of pitch motor 117 carries both the housing and output member of motor 118. Output member 165 of roll motor 118 carries the output of the five-motor stacked array, plate 158 (Figs.15 and 17).

32

The head pitch adjustment 134 and roll adjustment 135 (motors 117 and 118, respectively) are achieved by maximizing the head output signal, as this signal is derived from reading the alignment data track on master disk 103. It has been found that a plot of signal strength as a function of the head pitch or roll adjustment usually shows a relatively broad, flat maximum-signal response. As a result, an exemplary way to adjust both pitch and roll is to adjust the head a given number of motor steps, in both directions, off the nominal centre position at which motors 118 and 117 and head 101 are maintained during the prior tangent, radial and azimuth adjustment. If the signal strength is flat for all three of these head positions (nominal, and a given number of motor steps off-nominal, in both directions), the head is positioned to nominal. If, however, a reduction in signal strength is found in one direction off-nominal, the head is positioned, for example, at the other position off-nominal. If both off-nominal positions show a reduction in signal strength, the head is of course positioned at nominal.

Here again, the signal strength referred to may be the average signal strength derived from all the data groups 24 to 28 for one or more revolutions of the master disk.

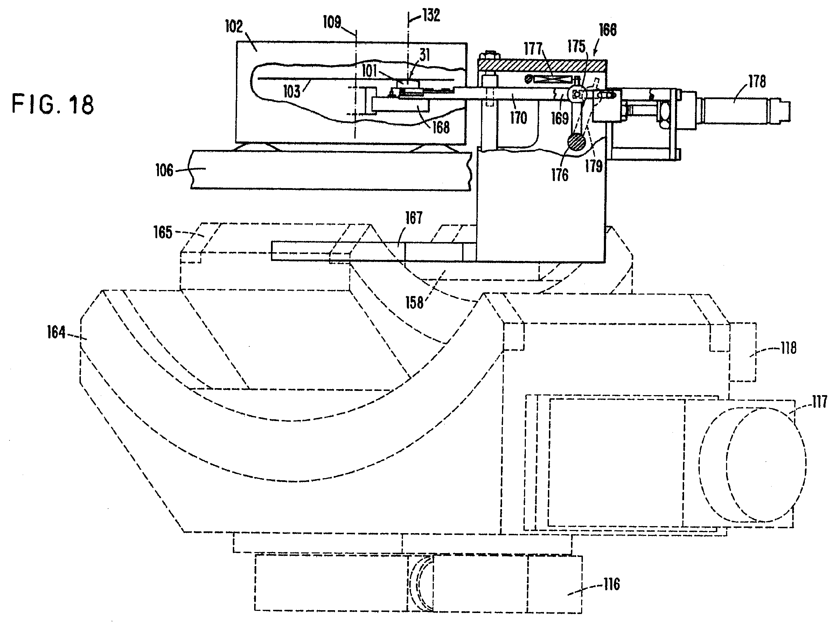

Fig.18 shows the aforementioned pitch and roll output members 164 and 165 in dotted line, and shows head holder/manipulator 166 and its horizontally disposed mounting plate 167 bolted to plate 158, i.e. to the output of the five-motor stacked array.

The head 101 is loosely disposed relative the disk drive head carriage 168 as output arms 169, 170 of the head holder/manipulator support the head gap in the general vicinity of point 31, and in proper penetration to the flexible master disk 103 which now engages to the drive spindle (not shown) of the flexible disk drive 102 which is undergoing head adjustment.

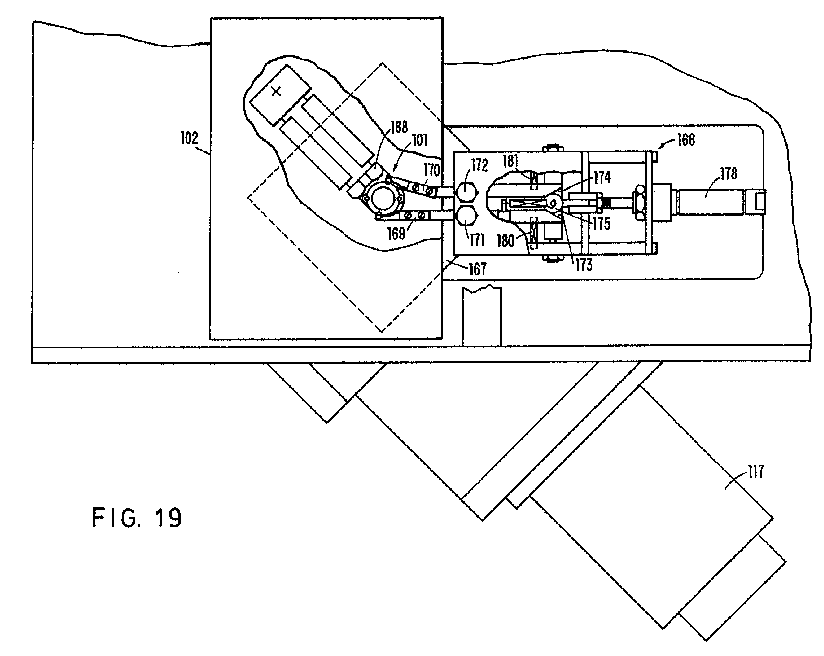

Fig.19 shows the drive head carriage 168. The construction and arrangement of such a head carriage is disclosed in application No.82111572.2 (EP-A        ).

The manipulator pair of movable arms 169 and 170 pivot about vertical axes 171 and 172, respectively. The other ends of these arms include beveled surfaces 173 and 174, respectively, which cooperate with a control ball 175.

Ball 175 (Fig.18) pivots at 176 and is biased to a generally upright, vertical position, by spring 177. Linear motor 178, when energized, pulls ball 175 to its dotted line position 179. In this position, a pair of springs 180, 181 (Fig.19) operate to move the beveled ends of arms 169, 170 together. In this position, the left-hand ends of arms 169, 170 (as viewed in Fig.19) are separated either to release a head 101 which has been secured to carriage 168, at the end of an alignment procedure, or, alternatively, to accept a head 101 which is loosely positioned on carriage 168 of a disk drive 102 which has just been inserted into its proper position on table 106, prior to undergoing head alignment.

If the latter is true, subsequent de-energization of motor 178 operates to release the arms 169 and 170 to pick up head 101 and to hold it in a known vertical position relative the spin plane of disk drive 102, as this spin plane is established by the disk drive spindle.

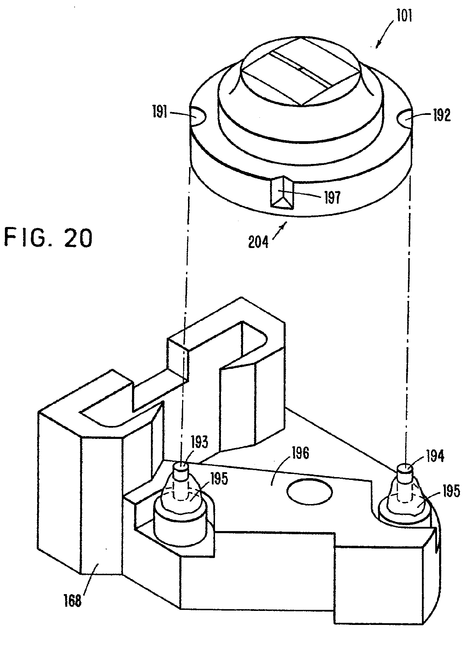

Fig.20 shows head 101 exploded away from carriage 168. Head 101 includes two, 180°-disposed, locating channels 191 and 192 which mate with locating pins 193 and 194. Ultraviolet sensitive adhesive 195 is first placed on pins 193, 194, and perhaps on surface 196. The operator then loosely places head 101 on carriage 168, prior to placing disk drive 102 on table 106. Channels 191, 192 are larger than pins 193, 194, and this loose-fit enables head 101 to be adjusted without producing binding between the pins and the interior surfaces of the notches.

As an alternative, adhesive 195 may be added after head 101 is placed on pins 195. Also it may be desirable to add small glass beads or powder to the glue, in order to enhance the ability of the glue to span the gap between the members to be glued. This glass powder is preferably of the size range 45 microns in diameter.

Once the head is accurately positioned, the adhesive 195 is set by the application of ultraviolet energy, the distribution of which may be assisted by the glass beads or powder in the adhesive.

Head 101 also includes a pair of pick-up notches 197, one only of which is visible in Fig.20. These two notches are also 180° disposed. Each notch includes three interior flat surfaces which form a solid triangle. The notches cooperate with the ends of the head holder/manipulator arms 169, 170 (Fig.19).

With this arrangement, the head is firmly gripped, and yet the glue interface is unobstructed, so that the glue can be flooded with ultraviolet light after the head has been adjusted.

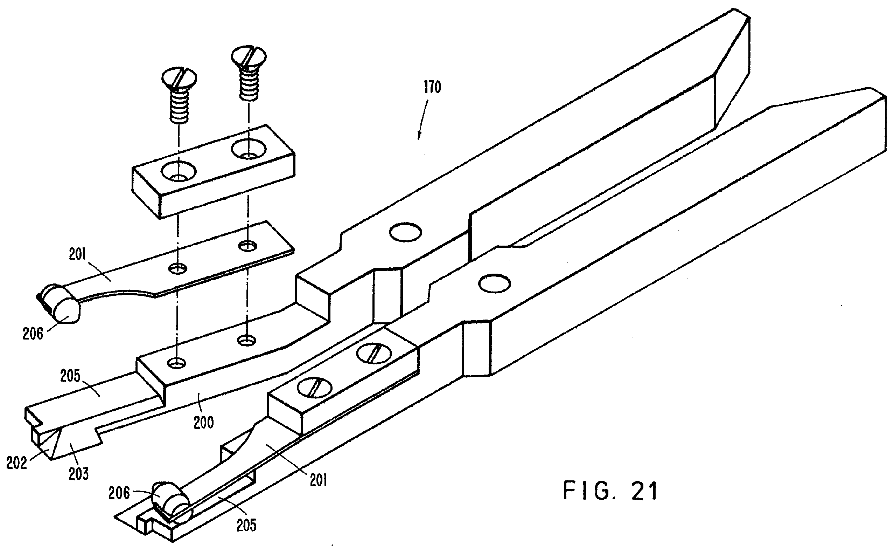

The ends of holder/manipulator arms 169, 170 (Fig.21) which cooperate with head 101, and specifically the two pick-up notches 197, are almost identical in construction and function. Each arm includes a rigid member 200 and a top-located spring arm 201. Member 200 includes two head-pick-up ramp surfaces 202 and 203 which cooperate with the underside of head 101, in the general location indicated by numeral 204 (Fig.20). As these ends of arms 169, 170 swing together, ramps 202, 203 (Fig.21) cause the bottom of the head to be lifted and placed on the two horizontal surfaces 205 of arms 169, 170. Surfaces 205 occupy a common plane which is parallel to the spin-plane of the master disk. It is surfaces 205 which accurately locate head 101. Spring arms 201 include a locating button 206 which is deflected up into the apex of solid triangle 197 (Fig.20) located 180° on opposite sides of head 101. In this manner, spring arms 201 force head 101 down onto surfaces 205.

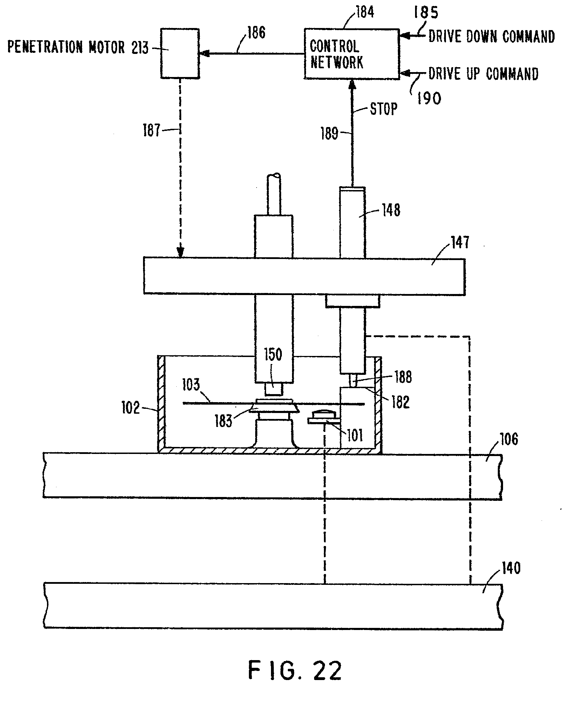

Fig.22 discloses the manner in which penetration motor 213 (Fig.11) (which is equivalent to 113 in Fig.11) produces the correct relative, vertical movement between movable master disk 103 and stationary head 101, in order to achieve a desired penetration of the disk spin-plane by the head.

Table 106 floats vertically due to the operation of weight 151. Head 101 and sensor 148 cannot move vertically because they are both fastened to base plate 140, as represented by the broken lines in Fig.22. Table 147 can be driven vertically downward by operation of penetration motor 213.

Disk drive 102 includes an accurately located, horizontal reference surface 182. Surface 182 is accurately located, in the vertical direction, relative the disk spin-plane, as this spin-plane is

36

established by disk drive spindle 183. The spindle is accurately vertically-located relative datum surface 182. Sensor 148 engages surface 182. With motor drive shaft 150 disengaged from spindle 183 (as shown) the sensor movable output plunger 188 is retracted into sensor 148 due to the interference between surface 182 and plunger 188.

In order to produce the desired disk penetration by stationary head 101, the operator activates a drive-down command on line 185 to control network 184. This network has an output 186 which energizes motor 213. The motor mechanical output, represented by arrow 187, now causes table 147 to begin moving down. Motor 110, and its output shaft 150, are carried by table 147 and also move down.

After a short distance of such movement, shaft 150 encounters spindle 183. Sensor 148 has not disengaged from surface 182 at this time. However, plunger 188 has moved downward out of the sensor housing. Motor 213 continues to operate, pushing table 147 down. Table 106 now also moves down because it is pushed by the 150, 183 interference. Tables 106 and 147 are now both moving down, as is disk 103 and plunger 188.

When the desired penetration of disk 103 by head 101 has been achieved, plunger 188 has moved vertically downward, out of the housing of sensor 148, and the sensor issues a stop command on conductor 189. Network 184 is now controlled to de-energize motor 213. Tables 106 and 107 now reside in their respective positions until head 101 is aligned by operation of the five-motor stack 114 to 118, whereupon the head is secured to the disk drive head carriage 168, as by the use of ultraviolet sensitive adhesive.

37

After the adjusted head has been secured, motor 178 of the head holder/manipulator is energized, thus causing arms 169, 170 to disengage from the head. The operator now actuates a drive-up command on conductor 190, and control network 184 energizes motor 213 to raise table 147. Table 106 follows, until a stop is encountered. Further upward movement of table 147 allows the operator to remove aligned drive 102, and replace it with another drive to be aligned.

Ideally, the operator removes an adjusted drive 102 by moving it to the left, as shown in Fig.19. Mechanical stops (not shown) may be placed on table 106 to guide the drive during such movement.

In the alternative, radial motor 115 and tangential motor 114 may be energized to move the head holder/manipulator away from the disk drive. When another drive has been manually placed, and properly corner-registered on table 106, these two motors would then be energized to move the head holder/manipulator into position where energization of its actuator 178 causes arms 169, 170 to grip that new disk drive's loosely disposed head 101, as seen in Fig.19.

Aforesaid motors 114 to 118, and motor 213 can be any of a number of commercially available, fine-resolution stepper motors.

A preferred arrangement for coupling motor shaft 150 to master alignment disk 103 is shown in Fig.13, where the two-part metal hub 210, 211 is shown resting on the disk drive spindle 183. Hub part 210 includes one pin-receiving hole 311 which mates with a pin 212 carried by motor shaft 150. In this way, if a motor tachometer generates tachometer pulses, the position of pulse 22 is accurately determined relative alignment data track on centre line 20. Pin 212 also provides the rotational drive force to disk 103, as a metal ball 213

38

ensures compliance between motor shaft 150 and the various disk drives 102 to be aligned. An important feature of this arrangement is that the centre of ball 213 lies both in the spin-plane of disk 103, and on spin axis 109.

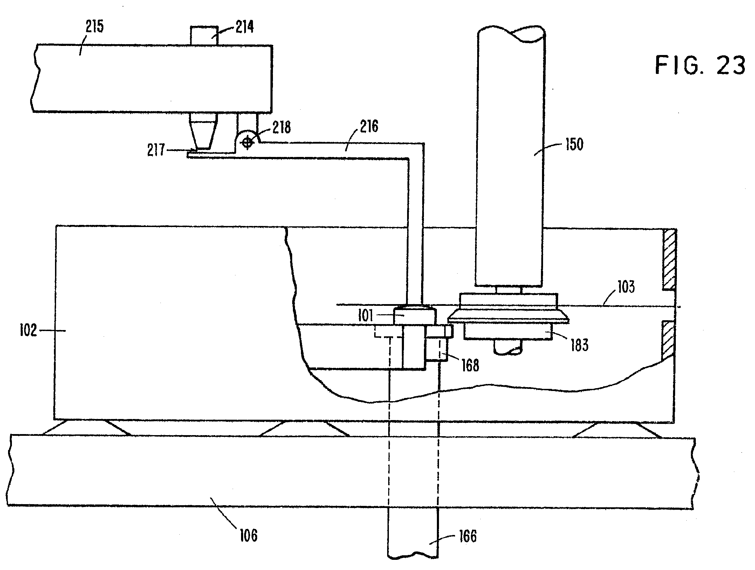

With reference to Fig.23, yet another way to achieve head penetration movement 132 will now be described. In this view, disk drive 102, whose head 101 is to be adjusted, is held by table 106, as the head is held by head holder/manipulator 166 (shown in outline form for convenience, and better seen in Figs. 18 and 19). Master alignment disk 103 rests on the drive spindle 183. The disk drive head carriage 168 is also shown in outline form.

Head 101, and its holder/manipulator 168 are mounted at a fixed vertical position, as is a capacitance probe 214 which is mounted to support beam 215. Beam 215 carries a pivoted, L-shaped metal arm 216 which, when head penetration of disk 103 is proper, forms a desired gap 217 to the lower end of probe 215.

In order to achieve this desired gap 217, drive 102 is moved vertically downward, as disk 103 spins. Arm 216 initially distorts the disk, and gap 217 does not exist when head 101 is below the disk spin plane. As the stationary head moves relatively upward (due to downward movement of disk drive 102 and disk 103), arm 216 is engaged by the head and the intermediate disk, and arm 216 pivots about its pivot axis 218. Thus, the desired size gap 217 is established, whereupon downward movement of drive 102 is stopped.

In the aforesaid embodiments of the present invention it is contemplated that the various mechanical forces applied to the disk drive undergoing head alignment be substantially identical to those which will subsequently occur when the finished disk drive is put into use. An example of one such force is the force by which the aforesaid master disk is loaded onto the spindle of the disk drive undergoing alignment. Therefore, it is within the present invention to provide a substantially completely manufactured disk drive, absent final attachment of its head of course, and then to use, for example, (1) that drive collet mechanism to clamp the aforesaid master disk to the drive spindle, (2) that drive pressure bail, or pad, to press the master disk down (at aforesaid point 31) onto the head undergoing alignment, and (3) the disk drive motor to spin the master alignment disk. In this case of course, it is also necessary to provide a master alignment disk which not only carries alignment data groups 24 to 28 (Fig.4), but also carries position-information track 22,23. A fixture-mounted head then cooperates with position-information track 22,23 to provide the aforesaid signals which are used to establish alignment track position information such as the sectors of Fig.6.

The two aforesaid fixture embodiments of the present invention are capable of either manual or automatic control of the various head alignment motors. If those skilled in the art select automatic control, use of the Motorola 6800 microprocessor is exemplary. The programs which support the afforesaid control of the head alignment motors, in accordance with the read-signal derived from the head being aligned, can take a great number of forms. As an aid to those skilled in the art in preparing a program to implement the present invention, the following program module implements the aforesaid radial alignment function using the Motorola 6800.

In this program module, memory locations are accessed in order to compute (1) the average head-signal magnitude derived from data subgroup 25 (hereinafter designated R25), and (2) the average

40

head-signal magnitude derived from data subgroup 26 (hereinafter designated R26). In both cases, the average is for one 360° revolution of the master disk data track. The program module then computes the value

$$\frac{R25-R26}{R25+R26}$$

The magnitude of this computation is indicative of the distance that the head should be moved along radius 29 in order to achieve the condition where R25 equals R26. The plus or minus sense of this computation is indicative of the direction that the head should be moved.

```
          SPC
**   PROCESS RADIAL DATA **
RDATA     EQU       *              GET RADIAL AVERAGES
          SPC
          LDX       #RA1SUM
CLRA1S    CLR       O,X            CLEAR RA1SUM AREA
          INX
          CPX       #RA1SUM+16
          BNE       CLRA1S
          LDX       #RA2SUM
CLRA2S    CLR       O,X            CLEAR RA2SUM AREA
          INX
          CPX       #RA2SUM+16
          BNE       CLRA2S
          SPC
          LDX       #SUMS
ADDRA1    LDA A     1,X            ADD UP RADIAL 1 DATA
          ADD A     RA1SUM+3       PUT IN RA1SUM
```

0093886

```
            STA A   RA1SUM+3     LOW BYTE
            LDA A   0,X
            ADC A   RA1SUM+2
            STA A   RA1SUM+2     SECOND BYTE
            LDA A   #$0
            ADC A   RA1SUM+1
            STA A   RA1SUM+1     THIRD BYTE
            LDA A   #$0
            ADC A   RA1SUM
            STA A   RA1SUM       FOURTH BYTE
            SPC
            LDA A   #12
RA1D12      INX                  INCREMENT X REG BY 12
            DEC A                POINTS TO NEXT RADIAL 1 AREA
            BNE     RA1D12
            SPC
            CPX     #SUMS+180    CHECK END
            BNE     ADDRA1
            SPC
            LDX     #SUMS+2
ADDRA2      LDA A   1,X          ADD UP RADIAL 2 DATA
            ADD A   RA2SUM+3     PUT IN RA2SUM
            STA A   RA2SUM+3     LOW BYTE
            LDA A   0,X
            ADC A   RA2SUM+2
            STA A   RA2SUM+2     SECOND BYTE
            LDA A   #$0
            ADC A   RA2SUM+1
            STA A   RA2SUM+1     THIRD BYTE
            LDA A   #$0
            ADC A   RA2SUM
```

42

```
            STA A    RA2SUM          FOURTH BYTE
            SPC
            LDA A    #12
RA2D12      INX                      INCREMENT X REG BY 12
            DEC A                    POINTS TO NEXT RADIAL 2 AREA
            BNE      RA2D12
            SPC
            CPX      #SUMS+182       CHECK END
            BNE      ADDRA2
            SPC
            LDA A    #195            SET UP DIVISOR
            STA A    RA1SUM+7
            STA A    RA2SUM+7
            LDX      #RA1SUM         POINT TO DIVIDEND
            JSR      DIV32           FIND AVERAGE
            LDX      #RA2SUM         POINT TO DIVIDEND
            JSR      DIV32           FIND AVERAGE
            LDA A    RA2SUM+11       GET DIFFERENCE IN AVERAGES
            LDA B    RA2SUM+10
            SUB A    RA1SUM+11
            SBC B    RA1SUM+10
            STA A    RADDIF+1
            STA B    RADDIF
            SPC
            LDA A    RA2SUM+11       GET SUM OF TWO AVERAGES
            LDA B    RA2SUM+10
            ADD A    RA1SUM+11
            ADC B    RA1SUM+10
            STA A    RADSUM+1
            STA B    RADSUM
            SPC
```

```
            LDA A     RADDIF          SAVE SIGN
            AND A     #$80
            BEQ       POSR
            LDA B     #'2
            STA B     SIGNR           IN SIGNR
            NEG       RADDIF          TWO BYTE TWO'S COMPLEMENT
            NEG       RADDIF+1                   "
            BCC       TWSOKR                     "
            DEC       RADDIF                     "
TWSOKR      BRA       MULTR
POSR        LDA B     #'1
            STA B     SIGNR
**   DIVIDE DIFFERENCE IN SUMS BY SUM OF SUMS   **
            SPC
MULTR       LDX       #1000
            STX       INBUFF
            LDX       RADDIF
            STX       INBUFF+2        MULTIPLY DIFF BY 1000
            LDX       #INBUFF
            JSR       MUL16
            SPC
            LDX       INBUFF+6
            STX       INBUFF+2        MOVE PRODUCT TO DIVIDEND SLOT
            LDX       INBUFF+4
            STX       INBUFF
            SPC
            LDX       RADSUM
            STX       INBUFF+6        MOVE RADSUM TO DIVISOR SLOT
            LDX       #0
            STX       INBUFF+4        HIGH WORD IS 0
            LDX       #INBUFF
```

44

```
JSR        DIV32           FIND % DIFFERENCE
SPC
LDA A      INBUFF+11
STA A      PRADIF+1        PUT % DIFF IN PRADIF
LDA A      INBUFF+10
STA A      PRADIF          HIGH BYTE
LDX        #145
STX        INBUFF
LDX        PRADIF
STX        INBUFF+2        1.45 TIMES PRADIF=MICROMETRES
LDX        #INBUFF
JSR        MUL16
SPC
LDX        INBUFF+6
STX        INBUFF+2        MOVE PRODUCT TO DIVIDEND SLOT
LDX        INBUFF+4
STX        INBUFF
SPC
LDX        #100
STX        INBUFF+6        DIVIDE BY 100
LDX        #0
STX        INBUFF+4        HIGH WORD IS 0
LDX        #INBUFF
JSR        DIV32           FIND NO. OF MICROMETRES
SPC
LDA A      INBUFF+11
STA A      PRADIF+1        PUT ANSWER IN PRADIF
LDA A      INBUFF+10
STA A      PRADIF          HIGH BYTE
LDA A      INBUFF+15       GET REMAINDER
CMP A      #50             SEE IF REM. IS OVER .5
```

45

```
        BLT       RADDO
        LDA A     PRADIF+1
        ADD A     #1            ADD 1 TO LOWER BYTE
        STA A     PRADIF+1
        LDA A     PRADIF
        ADC A     #0            ADD CARRY IF THERE IS ONE
        STA A     PRADIF
RADDO   RTS
```

The invention thus far described could be defined as apparatus for use in adjusting the position of a magnetic head while the head is loosely held within or adjacent the head carriage of a flexible disk drive, to which carriage the head is to be secured, the apparatus comprising support means adapted to receive a flexible disk drive such that the spin-plane of the disk drive spindle occupies a known plane in space, and the spindle spin axis occupies an axis orthogonal thereto, a master flexible disk rotatable with the spindle and including a data track concentric with the orthogonal axis, the intersection of a given fixed-position disk radius and the centre of the data track defining a point in space to which the head's data transducing gap is to be adjusted, a movable head holder/manipulator initially holding a head in the vicinity of the carriage and a point in space, means operable to move holder/manipulator towards the disk thereby to position the head with known penetration of the spin-plane of the disk, a first reversible linear motor operably connected to the holder/manipulator and operable to move the head along the fixed-position radius, and a second reversible linear motor operably connected to the holder/manipulator and operable to move the head along a line which lies in the spin-plane and is generally tangent to the centre of the data track at the point in space, the first and second linear motors being adapted to be controlled by the head signal, as the head reads the data track, thereby to control the first linear motor to centre the head gap on the data track, and to control the second linear motor to adjust the head gap to a desired tangential position relative to the fixed-position disk radius.

In such apparatus, where the spin-plane is horizontal and the spin axis vertical, the relative movement of the disk and the holder/manipulator, during penetration adjustment of the head, may be linear movement along an axis parallel to the spin axis.

Such apparatus preferably also includes a first bidirectional rotary motor arranged with the first and second linear motors, the first rotary motor producing rotation of the head gap about an axis which generally interesects the point in space and is orthogonal to said spin-plane, and being controlled by the head signal to produce azimuth adjustment of the head gap until the gap is parallel to the fixed-position radius.

Such apparatus advantageously also includes second and third bidirectional rotary motors providing pitch and roll adjustment, respectively, of the head gap as the second rotary motor produces rotation of the head gap about the fixed-position radius, and as the third rotary motor produces rotation of the head gap about the tangent line.

The described apparatus could alternatively be defined as manufacturing apparatus for use in adjusting the position parameters of a magnetic head while the head is loosely held adjacent the head carriage of a disk drive, to which carriage the head will thereafter be secured, the apparatus comprising a support adapted to receive a disk drive so that the spindle of the disk drive occupies a known

0 0 9 3 8 8 6

47

position, a master disk rotatable with the spindle, the plane of the disk occupying a spin-plane which is normal to a known axis, the master disk including a circular data track which is concentric with the spin axis, such that the intersection of a fixed-position disk radius and the centre of the data track defines a point in space to which head is to be adjusted, a movable head holder/manipulator adapted to hold the head in the general vicinity of the point in space, and a serial array of two linear motors and three rotary motors of which the motor at one end of the array is fixed to the support, and the motor at the other end of the array movably supports the head holder/manipulator, the first and second linear motors producing linear motion of the head along the fixed-position radius, and along a line which is in the spin-plane and is generally tangent to the centre of the data track at the point, respectively, the first, second and third rotary motors producing rotation of the head gap about an axis which is normal to the spin-plane and interesects the point, about an axis coincident with the fixed-position radius, and about an axis coincident with the tangent, respectively.

Preferably, the motors are controlled, in accordance with the signal derived from the head as it reads the data track.

The invention could alternatively be defined as apparatus for use in adjusting the position of a magnetic head while the head is loosely held relative the head carriage of the disk drive, to which carriage the head is thereafter intended to be secured, the apparatus comprising a support adapted to receive a disk drive such that the spin-plane of the disk drive spindle is known, and its spin axis is known, a master disk rotatable with the spindle, the spin-plane of the disk occupying substantially the spindle spin-plane, the master disk including an alignment data track concentric with the spin axis, the

48

intersection of a fixed-position disk radius and the centre of the data track defining a point in space to which the head is to be adjusted, a movable head holder/manipulator adapted to hold the head in the general vicinity of the point in space, and a stacked serial array of two linear motors and one rotary motor of which the motor at one end of the array is fixed to the support, and the motor at the other end of the array movably supports said head holder/manipulator, one of the linear motors producing linear motion of the head gap along the fixed-position radius, the other of the linear motors producing linear motion of the head gap along a line which is in the spin-plane and is tangent to the centre of the data track at the point in space, or lies along the centre line of the data track, and the rotary motor producing rotation of the head gap about an axis which is normal to the known plane and interesects said point.

The disclosed invention could be defined as apparatus for use in operatively positioning the head of a flexible disk drive relative to the drive movable head carriage during manufacture of the disk drive, comprising a master data disk adapted to be mounted on the spindle of the disk drive whose head is to be aligned, an alignment data format carried by the disk as a circular data track at track N of the multiple-track format, the data format comprising multiple repeating data groups about the 360° circumference of the data track, a movable head holder/manipulator adapted to hold the head loosely at the location of a fixed-position disk radius, and relative to the movable head carriage, as the head carriage is positioned to access the data of track N, such that the intersection of the centre line of track N and the disk radius defines a point in space to which the transducing gap is to be aligned, a serial array of a first and a second bidirectional linear motor and a first bidirectional rotary motor, the motor on one end of the array being fixed, and the motor at the other

49

end of the array supporting the holder/manipulator, and control means responsive to the head output signal derived from reading track N, and operative as a result of the output signal to control one linear motor to centre the head gap on track N, to control the other linear motor to move the head gap in a direction generally normal to the fixed-position radius, and to control the rotary motor to align the head gap parallel to the fixed-position radius.

Such apparatus may with advantage include means for providing a start-of-track indicator whose position is related in a known manner to the fixed-position radius and to the data track, the control means being additionally controlled by detection of the start-of-track indicator.

In such apparatus, the data format may comprise repeating three-data groups, and the control means may be operable to derive a separate output signal for each of the repeating three-data groups of track N.

Such three-data groups may include a first data group operable to control the one linear motor, a second data group operable to control the other linear motor, and a third data group operable to control the rotary motor.

The first data group may comprise a first radial-adjust data portion asymmetrically positioned to one side of track N centre line, and a second radial-adjust data portion asymmetrically positioned to the other side of track N centre line, the control means including amplitude responsive means sensitive to the head signal derived from the radial-adjust data groups and operable to control the one linear motor.

50

The second data group may comprise a tangent-adjust data portion, the control means including time-dependent means sensitive to the time of occurrence of the head signal derived from the tangent-adjust data portion and operable to control the other linear motor.

The time-dependent means may be controlled by the position of the master data disk, as the position of this disk compares to the time of arrival of the tangent-adjust data portion at the head to be adjusted.

The third data group may comprise a first azimuth-adjust data portion skewed at a known angle to the centre line of track N, and a second azimuth-adjust data portion skewed at the same known angle, but in an opposite direction, to the centre line of track N, the control means including amplitude responsive means, sensitive to the head signal derived from the two tangent-adjust data portions, and operable to control the first rotary motor.

The serial motor array in such apparatus may include a second and a third rotary motor, the control means being additionally operative to control the second rotary motor to rotate the head gap about an axis parallel to the fixed-position radius, and to control the third rotary motor to rotate the head gap about an axis parallel to the direction which is normal to the fixed-position radius.

With advantage, the control means may include amplitude responsive means, sensitive to one or more of the data portions, and operable to control the second and third rotary motors.

In an alternative definition, the invention may comprise a manufacturing apparatus for use in adjusting the position of a magnetic head, relative to a point in space, while the head is loosely held relative to the head carriage of a disk drive, to which carriage the head will be secured, including an alignment-data disk supported by the apparatus so that the spin-plane of the disk includes the point, and an alignment data track on the disk intersects the point, a head holder/manipulator holding the head with its data-transducing gap adjacent the point, and in transducing relationship to the data track, a serial stack of motors supported by the apparatus and having an output member supporting the head holder/manipulator, the serial stack of motors being adapted to be controlled by the head signal, as the head transduces the data track, such that (1) a first motor moves the head along a radial line which occupies the spin-plane and the point in order to centre the head on the data track; and (2) a second motor rotates the head about an axis which is normal to the spin-plane, and interesects the spin-plane at the point, in order to azimuth-position the head with its transducing gap normal to the data track centre line.

Such apparatus may serial include a third motor adapted to move the head along the centre line of the data track, and in the spin-plane, in order to position the head tangentially relative to the point.

The serial stack of motors may include a fourth motor adapted to rotate the head about the radial line, in order to pitch-position the head relative to the spin-plane.

The serial stack of motors may include a fifth motor adapted to rotate the head about a spin-plane-line which is tangent to the centre line of the data track at the point, in order to roll-position the head relative to the spin-plane.

The present invention also extends to circuit means for interrogating the data track signal from the master disk and providing an output signal which controls tangent radial and azimuth head adjustment.

In this respect, the invention may be defined as apparatus used to operatively position the head of a flexible disk drive relative a movable head carriage, during manufacture of the disk drive, including a master data disk adapted to be mounted on the spindle of the disk drive whose head is to be aligned, an alignment data format carried by the disk as a circular data track at track N of the multiple-track format, the data format comprising multiple, repeating three-data groups about the 360° circumference of the data track, a movable head holder/manipulator adapted to hold the head loosely at the location of a fixed-position disk radius, and relative to the movable head carriage, as the head carriage is positioned to access the data of track N, such that the intersection of the centre line of track N and the disk radius defines a point in space to which the transducing gap is to be aligned, motor means supporting the holder/manipulator, and movement control means responsive to the head output signal derived from reading track N, and operative as a result of the output signal to control the motor means to (1) move the head gap in a direction generally normal to the fixed-position radius, (2) centre the head gap on track N, and (3) align the head gap parallel to the fixed-position radius, and circuit means operable to derive a separate output signal for each of the repeating three-data groups, on track N, and including means to average the multiple output signals, and to control the motor means in accordance with the average.

Preferably, the circuit means includes means operable to define an acceptable signal for at least one of the data groups, and to disregard unacceptable signals when deriving the average signal.

53

The data groups may comprise a first group of magnetic transitions for effecting movement (1), including transitions which are normal to and centred on track N, a second group of magnetic transitions for effecting movement (2), including first transition portions normal to and positioned on one side of the centre line of track N, and second transition portions normal to and positioned on the other side of the centre line of track N, and a third group of magnetic transitions for effecting movement (3), including two transition portions which are generally centred on track N but are inclined at opposite but generally equal angles to the track centre line, the apparatus including a disk-position signal generator, wherein the circuit means is responsible to the time of occurrence of the first data group at the gap of the head to be adjusted, as this time is compared to a unique disk position, the circuit means responding to this time in order to derive a signal operable to control the motor means in order to achieve movement (1).

The disk position generator may provide a clock signal whose repetition rate is a function of the rotational speed of the disk, and counter means responsive to the clock signal and operable to generate a count which is a function of the time difference between the occurrence of the first data group at the head gap and the occurrence of the unique disk position, the time difference comprising a signal operable to control the motor means in order to achieve the movement (1) in bidirectional fashion.

The circuit means may include validity checking means responsive to the absence as well as the presence of the first data group at the head gap, in relation to the time of occurrence of the unique disk position, in order to determine if the time difference is a valid

54

measure of the location of the head gap generally normal to the fixed-position radius.

The circuit means may count the clock as a function of the occurrence of the unique disk position, and as a function of the occurrence of the first data group at the head gap, and compare these two counts to generate a signal whose magnitude is the necessary distance for movement (1), and whose sense is the necessary direction for movement (1), and sums these two counts to determine if the correct number of clock transitions have been counted, an incorrect number being indicative of invalid data.

The circuit means may be responsive to the amplitude of the two transition portions of the second and third groups of magnetic transitions, as these transitions are read by the head, and operable to derive an amplitude-comparison signal to control the motor means in order to achieve movements (2) and (3).

Each individual one of the three-data groups may be contained in a length of the data track which is divided into equal length sectors, M in number, a first of the data groups comprising magnetic transitions occupying one sector and one normal to and centred on track N, a second of the data groups comprising first magnetic transition portions occupying a second sector and one normal to and positioned to one side of the centre line of track N, and second magnetic transition portion occupying a third sector and one normal to and positioned to the other side of centre line of track N, a third of the data groups comprising first magnetic transition portions occupying a fourth sector and centred on track N but inclined thereto, and second magnetic transition portions occupying a fifth sector and centred on track N but inclined oppositely thereto, the five sectors being separated by track sectors which do not contain magnetic transitions, and including a disk position track having (1) a signal defining the beginning of a 360° revolution of the alignment data format, and (2) repetitive clock pulses which define at least the boundaries and middle of each of the sectors.

The circuit means may be responsive to the time of occurrence of the signal defining the beginning of the alignment data format, as compared, and the occurrence of the first data group at the gap of the head to be adjusted, the comparison being implemented by counting the clock pulses, the circuit means responding to this comparison in order to derive a signal which achieves movement (1).

Such apparatus may include counter means responsive to the clock pulses wherein the absence of a known number of pulses upon making the comparison results in the rejection of the comparison as valid data with which to implement movement (1).

The circuit means may respond to the signal defining the beginning of the alignment data format, and to the following clock pulses, in order to locate the physical sector positions of the two transition portions of the second and third groups of magnetic transitions, the circuit means being operable to derive an amplitude-comparison signal from the defined sectors in order to achieve movements (2) and (3).

The present invention further extends to an improved head holder/manipulator.

In this respect, the invention may be defined as manufacturing apparatus for adjusting the position of a magnetic head while the head is loosely held within or adjacent the head carriage of a flexible disk drive on which carriage the head is to be an integral operating part, and then securing the head to the carriage after the head is adjusted, including a master data disk rotatable with the disk drive spindle, so that the disk occupies a known axis and a spin-plane which is normal to the axis, the master disk including an adjustment data track concentric with the axis, the intersection of a given fixed-position disk radius and the centre of the data track defining a point in space to which the head gap of the disk drive is to be adjusted, a movable head holder/manipulator initially holding a head in the vicinity of the carriage and the point in space, and motor means operable to move the holder/manipulator in accordance with the data track signal as the data track is read by the head, thereby to position the head relative the data track, the holder/manipulator comprising movable head-gripping arms having datum surfaces holding the head at a plane parallel to the spin-plane, and spring members engaging the head and spring loading the head against the datum surfaces.

Preferably the arms may swing in a plane relative to the spin-plane, and include inclined lifting surfaces which incline upward away from the head, and terminate at the datum surfaces, the lifting surfaces first engaging the head, and thereafter moving the head as the arms swing towards each other.

With advantage the arms are constructed and arranged to move at the same rate of displacement, in the parallel plane, as the arms swing towards each other.

The head may include inclined pick-up notches which engage and stress the spring members as the head moves, thereby to cause the spring members to force-load the head against the datum surfaces.

The spring members may comprise flat springs whose flat portions lie in a plane parallel to the spin-plane, such that the spring members are rigid in the parallel plane.

The arms may be force-biased to a normally open position which releases the head, an actuator being operable to overcome the force-bias and thereby cause the arms to grip the head firmly.

The head may include gluing surfaces spaced from the inclined surfaces so that the gluing surfaces are unobstructed by the arms, the head carriage including attachment surfaces which loosely mate with the gluing surfaces, such that the head may be adjusted, and yet may be glue-attached to the carriage while still held by the arms.

Preferably the glue is non-ambient-light sensitive and bridges the space between the attachment surfaces and the gluing surfaces, so that the glue may be light-activated through the space which is unobstructed by the arms.

The apparatus may include a motor having a shaft compliantly coupled in driving fashion to the master disk, by virtue of a shaft-mounted drive pin which extends perpendicular to the spin-plane and enters a hole formed in a hub carried by the master disk, the motor shaft including a ball interface to a cone carried by the hub, the centre of the ball occupying both the spin-plane and the axis.

Again the invention may be defined as manufacturing apparatus for use in adjusting the position of a magnetic head, relative to a point in space, while the head is loosely held relative to the head carriage of a disk drive to which the head will be clamped so as to be in an integral operating part of the carriage, including an alignment-data disk supported by the apparatus so that the disk spin-plane includes the point, and an alignment data track intersects the point, a head holder/manipulator holding the head with its data-transducing gap adjacent the point, and in transducing relationship with the data track, a serial stack of motors supported by the apparatus and having an output member supporting the head holder/manipulator, the serial stack of motors being adapted to be controlled by the head output signal, as the head transduces the data track, so that the motors implement at least one of radial, tangent, azimuth, pitch and roll adjustment of the head relative to the data track, and in which the head/holder manipulator comprises a pair of scissor-like, head-support arms which open and close in a plane spaced from, but parallel to, the spin-plane, each of the arms having a datum surface normally occupying the spaced plane, the datum surfaces holding the head during the aforesaid head adjustment, as the plane of the datum surfaces moves in order to accomplish the head adjustment, and spring bias means holding the head against said datum surfaces during the head adjustment.

In such apparatus, each of the head-support arms may have inclined head-lifting surfaces which are adapted to engage the head as the arms close, thereby to position the head on the datum surfaces, the spring bias means being engaged by the head during lifting, thereby to load the spring bias means.

Spring means may be associated with the head-support arms and operable to bias the arms to one of their open or closed positions, and an actuator may be operable to move the arms to the other of their two positions, the apparatus including means to clamp the head to the carriage by the use of a head surface not associated with the arms, when head adjustment has been accomplished, whereupon the head-support

59

arms are opened to release the adjusted head, and accept another head to be adjusted.

Preferably the head-support arms are constructed and arranged to provide equal rates of displacement, in the spaced plane, as the arms move from the open position to the closed position.

The spring means may comprise a flat leaf spring for each of the arms, the flat portion of the leaf springs occupying a plane parallel to the spin-plane, so that the leaf springs are rigid in that plane.

60

CLAIMS

1   A method of adjusting the mechanical position of a magnetic transducer (101) while the transducer is loosely positioned within the head carriage (168) of a flexible disk drive (102), to which carriage it is thereafter intended to be secured, comprising the steps of positioning the head carriage (168) in approximate alignment with a circular datum track of a rotating magnetic disk (102) on the drive, loosely holding the transducer (101) in operative relation to the head carriage (168) by the use of controllable actuator means (112,166) which is capable of producing linear movement of the transducer radial to the datum track, movement of the transducer generally along the datum track, and rotational movement of the transducer in its azimuth attitude relative to the datum track, utilizing the signal derived from the transducer as a result of reading the datum track to control the actuator means to position the head radially and tangentially relative to the datum track, and to control the actuator means to produce azimuth adjustment of the head relative to the data track.

2   A method according to claim 1, including the step of utilizing the signal to produce pitch and roll adjustment of the head relative to the data track.

3   A method according to claim 1 or 2, including the step of moving the transducer to produce a given penetration of the plane of the disk by the transducer.

4    A method according to claim 1,2 or 3, including the step of securing the head to the carriage while maintaining the disk rotation.

5    Apparatus for adjusting the mechanical position of a magnetic transducer (101) while the transducer is loosely positioned within the head carriage (168) of a flexible disk drive (102), to which carriage it is thereafter intended to be secured, comprising means (5) to position the head carriage (168) in approximate alignment with a circular datum track of a rotatable magnetic disk (102) on the drive, controllable actuator means (112,166) to hold the transducer (101) loosely in operative relation to the head carriage, control circuitry utilizing signals derived by the transducer from reading of the data track to control the actuator means to position the head radially and tangentially and in azimuth adjustment relative to the datum track.

6    Apparatus according to claim 5, in which the disk (102) carries on the data track a repetitive series of records to enable the head to derive output signals, the control circuitry including means to average the multiple output signals from similar records and to control the actuator means in accordance with the average signals so derived.

7    Apparatus according to claim 5 or 6, in which the actuator means includes head-gripping arms (169,170) providing datum surfaces (205) in a plane substantially parallel to the spin plane of the disk and spring members (201) engaging the head to spring load it against the datum surfaces.

FIG.1

FIG. 2

0093886

2/20

0093886

PITCH 134

ROLL 135

31

136,31

101

AZIMUTH 133

TANGENTIAL 130

31

RADIAL 29

PENETRATION 132

FIG. 3

0093886

FIG. 4

FIG. 6

0093886

FIG.10

| | |
|---|---|
| 118 | ROLL |
| 117 | PITCH |
| 116 | AZIMUTH |
| 115 | RADIAL |
| 114 | TANGENTIAL |
| 113 | PENETRATION |

ENABLE ROLL — 124
ENABLE PITCH — 125
ENABLE AZIMUTH — 126
ENABLE RADIAL — 127
ENABLE TANGENTIAL — 128

HEAD SIGNAL — 121

TACHOMETER SIGNAL — 122

FIG. 5

FIG. 7

FIG. 8

FIG. 9

FIG. 11

FIG. 12

FIG. 13

FIG. 14

FIG. 15

FIG. 16

0093886

FIG. 17

0093886

FIG. 18

FIG. 19

0093886

FIG. 20

0093886

FIG. 21

F IG. 22

FIG. 23